# EUROPÄISCHE PATENTSCHRIFT

(11) **EP 1 893 699 B1**
(45) Veröffentlichungstag und Bekanntmachung des Hinweises auf die Patenterteilung: **06.01.2010**
(21) Anmeldenummer: 06762162.3
(22) Anmeldetag: 23.06.2006
(51) Int. Cl.: C09C 1/00

(54) **PERLGLANZPIGMENTE MIT VERNETZBARER BINDEMITTELBESCHICHTUNG, BESCHICHTUNGSZUSAMMENSETZUNG, VERFAHREN ZUR HERSTELLUNG DER BESCHICHTETEN PERLGLANZPIGMENTE UND DEREN VERWENDUNG**
PEARLESCENT PIGMENTS WITH A CROSS-LINKABLE BINDING AGENT COATING, COATING COMPOSITION, METHOD FOR PRODUCING THE COATED PEARLESCENT PIGMENTS AND USE THEREOF
PIGMENTS NACRES A REVETEMENT DE LIANTS RETICULABLES, COMPOSITION DE REVETEMENT, PROCEDE DE PRODUCTION DES PIGMENTS NACRES ET LEUR UTILISATION

(30) Priorität: 24.06.2005 DE 102005029772; 08.07.2005 DE 102005032346
(43) Veröffentlichungstag der Anmeldung: 05.03.2008
(73) Patentinhaber: Eckart GmbH, 91235 Hartenstein (DE)
(72) Erfinder: KAUPP, Günter, 91284 Neuhaus (DE); SCHMIDT, Ulrich, 91217 Hersbruck (DE); SCHREIBER, Burkhard, 91217 Hersbruck (DE); ALBRECHT, Alexander, 91077 Dormitz (DE)
(74) Vertreter: Walcher, Armin
(86) Internationale Anmeldenummer: PCT/EP2006/006069
(87) Internationale Veröffentlichungsnummer: WO 2006/136435

(56) Entgegenhaltungen:
- WO-A-99/57204
- WO-A2-2005/063897
- DE-A1- 2 603 211
- DE-A1- 10 209 359

## Beschreibung

Die vorliegende Erfindung betrifft die Bereitstellung beschichteter Perlglanzpigmente, eine Beschichtungszusammensetzung, ein Verfahren zur Herstellung der beschichteten Perlglanzpigmente und deren Verwendung sowie auch einen beschichteten Gegenstand.

Mit Perigianzpigment-haltigen Lacken und Farben lassen sich optisch interessante Beschichtungen oder Lackierungen auf Gegenstände wie beispielsweise Automobilkarosserien, Fassadenelemente, etc. aufbringen. Eine effiziente Art der Lackierung ist die Lackierung mit Pulverlack.

Pulverlacke sind lösemittelfreie Lacksysteme, die mit elektrostatischen Verfahren auf einen zu lackierenden Gegenstand aufgebracht werden. Im Hinblick auf die Lösemittelfreiheit sind die Pulverlacksysteme sehr umweltfreundlich und insofern sehr vorteilhaft.

Im Stand der Technik sind schon einige Versuche unternommen worden, Perlglanzpigmente auch in der Pulverlacktechnologie zu verwenden.

In der DE 197 07 051 A1 wird ein Verfahren zur Herstellung eines Glanzpigmenthaltigen Pulverlacks offenbart. Hierbei werden die üblichen Pulveriackkomponenten und mindestens ein Glanzpigment in einen Behälter mit Mischelement eingebracht und nachfolgend mit einem überkritischen Fluid vermischt. Anschließend wird dieses Gemisch durch Düsen in einen zweiten Behälter eingelassen, wonach dann das überkritische Fluid entfernt wird. Dieses Verfahren ist aufgrund des hohen technischen Aufwandes (hohe Drucke, event. Kühlen) zur Handhabe des überkritischen Fluides sehr kostenintensiv. Außerdem kommt es zur Bildung von Agglomeraten der Glanzpigmentteilchen, was ihre Verwendung im Pulverlack optisch unattraktiv macht.

Die US 5,824,144 offenbart ein Perlglanzpigment, welches mit einer klebrigen Oberflächenbeschichtung versehen ist, wodurch eine Entmischung von Perlglanzpigment und Pulverlack vermieden werden soll. Die klebrige Oberflächenbeschichtung kann aus einem Polymer bestehen, wobei Melaminharze bevorzugt sind. Die klebrige Oberflächenbeschichtung kann u.a. auch durch Sprühtrocknung auf die Perlglanzpigmente aufgebracht werden. Durch die Verwendung klebriger Polymere auf den Perigianzpigmente kann es jedoch nachteiligerweise zur Bildung von Perlglanzpigment-Agglomeraten kommen, die bei der Pulverlackbeschichtung zu Lackfehlem führen können.

Die DE 100 58 860 A1 offenbart einen härtbaren Pulverlack, der hergestellt wird, indem Partikel, beispielsweise Effektpigmente, auf Pulverlack-Bindemittelpartikel aufgesprüht werden. Das Aufsprühen erfolgt unter solchen Bedingungen, daß die Perlglanzpigmente an den Pulverlack-Bindemittelpartikeln oberflächlich haften bleiben. Aufgrund der nur oberflächlichen, manchmal nur punktuellen, Bindung der Perlglanzpigmente mit den Bindemittelteilchen kommt es nachteiligerweise leicht zu einer Ablösung der Perlglanzpigmente von denselben und mithin zu Entmischungsproblemen. Hieraus wiederum resultiert eine Veränderung des relativen Verhältnisses von Bindemittel zu Perlglanzpigment in der Pulverlackbeschichtung. Dies führt u.a. dazu, daß der bei einer Applikation anfallende Überschuß an Pulverlack nicht recycliert werden kann, ohne daß es zu Qualitätsproblemen der bei der nächsten Pulverlackapplikation erzeugten Pulverlackbeschichtung kommt.

Die DE 100 47 622 A1 offenbart ein Verfahren zur Herstellung von polymerumhüllten Pigmentteilchen durch Präzipitation. Hierbei wird zunächst das Polymer in einem geeigneten Lösemittel gelöst und die Pigmentteilchen in diesem dispergiert. Anschließend wird ein Lösemittel hinzugegeben, in dem das Polymer nicht oder nur schlecht löslich ist. Dadurch wird das Polymer ausgefällt und umkapselt dabei die Pigmentteilchen. Die polymerumhüllten Pigmente werden beim Drucken verwendet.
Um das Druckmotiv fixieren zu können muß nachträglich ein Bindemittel zugegeben werden, welches dann gehärtet wird.

Die DE 102 52 007 A1 beschreibt lasermarkierbare Pigmente, bestehend aus einem Absorber, der mit einem Markierer beschichtet ist. Als Absorber können Effektpigmente verwendet werden, während als Markierer ein intrinsisch lasermarkierbares Polymer eingesetzt werden kann. Die lasermarkierbaren Polymere sind bereits auspolymerisiert und können nachträglich nicht mehr ausgehärtet werden.

Die DE 103 44 660 A1 offenbart "verkapselte" Pigmente, die aus einem mit einer äußeren wasserlöslichen Hülle versehenen Kern aus organischen und/oder anorganischen Pigmenten bestehen. Die wasserlösliche Hülle besteht dabei aus einem Filmbildner. Als Pigmente können auch Effektpigmente wie beispielsweise Perlglanzpigmente verwendet werden. Als verkapselte Pigmente im Sinne der Lehre dieser Offenlegung werden Granulate, Pellets etc. der Pigmente verstanden. Dies sind jedoch Angebotsformen, bei denen zwar eine Mischung aus Pigment und einem Bindemittel vorliegt, jedoch die Pigmente keineswegs mit dem Bindemittel umhüllt sein müsse. Nachteilig ist ebenfalls, dass der Kern eine Mehrzahl an Pigmenten umfasst. Diese Pigmente sind in wässrigen Formulierungen zu verwenden, in denen sich der Filmbildner rasch auflösen kann.

In der WO 99/57204 A1 wird ein mit Oberflächenmodifizierungsmitteln beschichtetes Effektpigment offenbart, bei dem das Ausgangspigment eine Schicht mit wenigstens einem reaktiven Oberflächenmodifizierungsmittel aufweist, wobei das Oberflächenmodifizierungsmittel eine Verbindung ist, die wenigstens zwei voneinander verschiedene und durch einen Spacer beabstandete funktionelle Gruppe chemisch an das Ausgangspigment gebunden ist.

In der DE 102 09 359 A1 wird ein beschichtetes plättchenförmiges Trägermaterial offenbart, bei welchem das Trägermaterial aus einem anorganischen Substrat besteht, welches mit mindestens einer Beschichtung versehen ist, wobei jede Schicht mindestens ein gehärtetes Melamin-Formaldehyd-Harz enthält oder aus einem solchen besteht, sowie ein Verfahren zur Herstellung des beschichteten Trägermaterials und Verwendung desselben als Effektpigment.

Die DE 26 03 211 C2 offenbart pulverförmige Perlglanzpigment-Zubereitungen, bei der feste Polymere auf Perlglanzpigmente mittels Sprühtrocknung zur Erhöhung der mechanischen Widerstandsfähigkeit aufgebracht werden. Die Polymere sind auspolymerisiert und besitzen hohe Molekulargewichte von etwa 10⁴ bis 10⁶ g/mol.

Aufgabe der Erfindung ist es, ein Perlglanzpigment bereitzustellen, das sich zur Verwendung in einem Pulverlacksystem zur Herstellung qualitativ hochwertiger Lackierungen eignet, wobei die im Stand der Technik bekannten Probleme vermieden werden sollen. Insbesondere soll das Problem der Entmischung von Pulverlack-Bindemittel und Perlglanzpigmenten gelöst werden.

Weiterhin ist die Bereitstellung eines Perlglanzpigmentes erwünscht, das auch bei Recyclierung und Wiederverwendung von nicht appliziertem Pulverlack qualitativ hochwertige Lackierungen ermöglicht.

Des weiteren ist erwünscht, daß ein solches Perlglanzpigment als staubarmes, rieselfähiges Pulver vorliegt und ferner eine vielseitige Verwendbarkeit in vielen pulverlack- und nasslacktypischen Systemen gewährleistet ist.

Aufgabe der Erfindung ist es ferner, ein kostengünstiges Verfahren mit hohen Durchsatzmengen zur Herstellung solcher Perlglanzpigmente bereitzustellen. Das Verfahren sollte einfach sein und eine schonende Behandlung der Perlglanzpigmente gewährleisten.

Die Aufgabe der Erfindung wird durch Bereitstellung eines Verfahren zur Herstellung von beschichteten Perlglanzpigmenten gelöst, wobei
die Beschichtung die Perlglanzpigmente umhüllt und nicht ausgehärtetes, jedoch chemisch vernetzbare(s) und/oder unter Einwirkung von Wärme, IR-Strahlung, UV-Strahlung und/oder Elektronenstrahlen vemetzbare(s) oligomere(s) und/oder polymere(s) Bindemittel umfasst, und das Verfahren die folgenden Schritte umfasst:
a) Herstellen einer Lösung oder Dispersion eines oligomeren und/oder polymeren Bindemittels in einem Lösemittel, bevorzugt einem organischen Lösemittel,
b) Beschichten der Perlglanzpigmente mit dem Bindemittel durch
   i) Dispergieren des Perlglanzpigmentes in der Lösung oder Dispersion von a) und anschließendem Sprühtrocknen dieser Dispersion oder
   ii) Versprühen der Lösung oder Dispersion aus a) auf in einem Gasstrom verwirbelt Perlglanzpigmente,
c) Trocknen der mit Bindemittel beschichteten Perlglanzpigmente in einem bewegten Gasstrom.

Bevorzugte Weiterbildungen des erfindungsgemäßen Verfahrens sind in den Unteransprüchen 2 bis 22 angegeben.

Die der Erfindung zugrundeliegende Aufgabe wird durch die Bereitstellung von beschichteten Perlglanzpigmenten gelöst, wobei die Beschichtung die Perlglanzpigmente umhüllt und nicht ausgehärtetes, jedoch chemisch vemetzbare(s) und/oder unter Einwirkung von Wärme, IR-Strahlung, UV-Strahlung und/oder Elektronenstrahlen vernetzbare(s) oligomere(s) und/oder polymere(s) Bindemittel umfasst.

Bevorzugte Weiterbildungen sind in den Unteransprüchen 24 bis 42 angegeben.

Die Aufgabe der Erfindung wird ferner durch Bereitstellung einer Beschichtungszusammensetzung gelöst, die Perlglanzpigmente nach einem der Ansprüche 23 bis 42 enthält.

Bevorzugte Weiterbildungen der Beschichtungszusammensetzung sind in den Unteransprüchen 44 bis 46 angegeben.

Die der Erfindung zugrundeliegende Aufgabe wird auch durch einen beschichteten Gegenstand gelöst, wobei der Gegenstand mit Perlglanzpigmenten gemäß einem der Ansprüche 23 bis 42 oder mit einer Beschichtungszusammensetzung gemäß einem der Ansprüche 44 bis 46 beschichtet ist.

Die Aufgabe der Erfindung wird schließlich auch durch die Verwendung eines Perlglanzpigmentes nach einem der Ansprüche 23 bis 42 in Farben, Lacken, Pulverlacken, Druckfarben, Kunststoffen oder kosmetischen Formulierungen wie Nagellack gelöst.

Der beschichtete Gegenstand ist vorzugsweise ein Gegenstand, der Umgebungsbedingungen, beispielsweise den natürlichen Wetterbedingungen ausgesetzt wird. Dies ist beispielsweise der Fall bei einem Fassadenelement wie einer Fassadenplatte oder einem Fensterrahmen. Da die erfindungsgemäßen Perlglanzpigmente von Bindemittel umhüllt sind, welches beim Aushärten eines applizierten Pulverlackes, beispielsweise beim Einbrennen, sich mit dem Bindemittel des Pulverlackes verbindet, sind die erfindungsgemäßen Perlglanzpigmente vollständig und zuverlässig in und unter einer schützenden Bindemittelschicht angeordnet und vor mechanischen Einwirkungen geschützt. Hierdurch werden bessere Abriebbeständigkeiten erreicht.

Die erfindungsgemäßen Perlglanzpigmente weisen eine umhüllende Beschichtung mit oder aus vernetzbaren Bindemitteln in ihrer oligomeren bzw. polymeren Ausgangsform auf. Die Bindemittel können, je nach ihrer chemischen Natur, unter Einwirkung von Wärme, IR-, UV- und/oder Elektronen-Strahlung oder auch durch Reaktion mit einem geeigneten Härter nach der Umhüllung des Perlglanzpigmentes polymerisieren und somit die Perlglanzpigmente in einen polymeren Film einbetten. Die vollständige Umhüllung führt zu einer wesentlich besseren abrasiven Stabilität des Perlglanzpigmentes.

Es hat sich völlig überraschend gezeigt, daß die erfindungsgemäßen Perlglanzpigmente in nicht agglomerierter Form vorliegen. Da die erfindungsgemäßen Perlglanzpigmente als nicht agglomerierte Pigmentpartikel vorliegen, ergeben sie bei Verwendung in einem Pulverlack eine qualitativ hochwertige Pulverlackbeschichtung. Bei den über das erfindungsgemäße Verfahren hergestellten beschichteten Perlglanzpigmenten ist charakteristisch, daß neben den erfindungsgemäßen Perlglanzpigmenten auch kugelförmige Bindemittelpartikel vorliegen. Die kugelförmigen Bindemittelpartikel entstehen aus Nebenfällungen des Bindemittels während des Beschichtens über das erfindungsgemäße Verfahren.

Unter einem Bindemittel wird erfindungsgemäß die in der DIN 55 945 angegebene Definition verstanden. D.h., das Bindemittel umfaßt sowohl den Filmbildner wie auch nicht flüchtige Hilfsstoffe wie Weichmacher und Trockenstoffe.

Die Bindemittel liegen in der Regel als Oligomere und/oder Polymere mit niedrigem Molekulargewicht vor. Das Molekulargewicht liegt vorzugsweise in einem Bereich von 200 g/mol bis 10.000 g/mol, weiter bevorzugt von 300 g/mol bis 9000 g/mol, noch weiter bevorzugt von 500 g/mol bis 8.000 g/mol. Die niedrigen Molekulargewichte der verwendeten Oligomeren und/oder Polymeren dienen der Einstellung bestimmter Viskositäten, die weder mit monomer gelösten noch mit hochmolekularen Bestandteilen möglich sind (s.a. P. Nanetti, Coatings Compendien "Lackrohstoffkunde" S. 17 ff., Vincentz Verlag 2000).

Härter liegen üblicherweise in monomerer Form vor. Die zunächst thermoplastisch vorliegenden Bindemittel und ein gegebenenfalls verwendeter Härter reagieren unter geeigneten Bedingungen wie z.B. erhöhter Temperatur miteinander unter Bildung eines Duromeren. Hierbei können Polymerisationen und bei der Verwendung von Härtern, Polykondensation oder auch Polyadditionen auftreten.

Dies unterscheidet die Beschichtung der erfindungsgemäßen Perlglanzpigmente auch wesentlich von den im Stand der Technik vorhandenen Polymerbeschichtungen. Die Bindemittel sind nach der Beschichtung der Perlglanzpigmente noch härtbar oder polymerisierbar. Dabei können die Bindemittel während der Beschichtung der Perlglanzpigmente und dem Verdampfen des Lösemittels durchaus leicht anpolymerisieren, jedoch nicht durchhärten. Die bislang bekannten Kunststoffbeschichtungen von Perlglanzpigmenten hingegen werden aus Monomeren gebildet, die sich möglichst vollständig zu einem polymeren Film auf der Pigmentoberfläche umsetzen. Diese überwiegend ausgehärteten Polymere sind nicht mehr reaktiv.

Die erfindungsgemäßen Perlglanzpigmente weisen mithin eine reaktive Bindemittelbeschichtung auf, die nach der Applikation des erfindungsgemäßen Perlglanzpigmentes gezielt eine Reaktion mit dem Bindemittel, bspw. eines Lackes oder einer Druckfarbe, ermöglicht.

Vorzugsweise wird das bzw. werden die Bindemittel aus der Gruppe ausgewählt, die aus Polyesterharzen, Epoxyharzen, Polyurethanharzen, UV-härtenden Systemen, Acrylaten und Mischungen davon besteht.

Bevorzugt werden als Polyesterharze gesättigte OH-Gruppe-haltige Polyesterharze mit einer OH-Zahl zwischen 15-350 mg KOH/g, bevorzugt 30-150 mg KOH/g und besonders bevorzugt 40 - 120 mg KOH/g verwendet. Ein typisches Harz ist Crylcoat 2872-0 der Firma Cytec, USA.

Weiterhin werden bevorzugt gesättigte Carboxylgruppe-haltigen Polyesterharze mit einer Säurezahl zwischen 15 - 120 mg KOH/g, vorzugsweise 20 bis 70 mg KOH/g verwendet. Typische Harze sind Crylcoat 1540-0 und Crylcoat 4432-4 der Firma Cytec, USA, www.cytec.com bzw. Uralac P2200 der Fa. DSM, Niederlande, www.dsm.com. Diese Harze können in Kombination mit dem entsprechenden Härter sowohl für bei Außenanwendungen erforderliche Korrosionsstabilitäten als auch für die weniger kritischen Anwendungen im Innenbereich optimiert worden sein.
Es können auch Mischungen der OH-Gruppe-haltigen und Carboxylgruppe-haltigen Polyesterharze verwendet werden. Vorzugsweise handelt es sich um üblicherweise in Pulverlacken eingesetzte Polyesterbindemittel.
Die Hydroxydzahl lässt sich jeweils nach der EN ISO 4629 und die Säurezahl nach der DIN EN ISO 2114 bestimmen.

Die Epoxyharze werden vorzugsweise aus der Gruppe ausgewählt, die mehr als eine Epoxygruppe enthalten und vorzugsweise ein Epoxyäquivalentgewicht (EEW) von 175-6.000, bevorzugt 400-2.500, besitzen.

Die Polyurethanharze werden bevorzugt aus der Gruppe ausgewählt, die aus OHfunktionellen Polyester- oder Polyacrylatharzen mit blockierten und/oder freien Polyisocyanaten und Mischungen davon besteht.

Die UV-härtenden Systeme sind vorzugsweise Verbindungen mit einfach und/oder mehrfach ungesättigten Doppelbindungen.

Weiterhin wird das oder die Bindemittel vorzugsweise ausgewählt aus der Gruppe der üblicherweise in Pulverlacken eingesetzten Bindemittel wie
- sogenannte Dual-Cure Harze der Typenbezeichnung Uranox, Fa. DSM, Niederlande
- vorzugsweise pulverlacktypische Epoxidharze mit einem Epoxyäquivalentgewicht von vorzugsweise von 175 bis 6.000, weiter bevorzugt von 450 bis 4.000.
- vorzugsweise pulverlacktypische Acrylatharze (z.B. der Fa. Mitsui, Japan)
- vorzugsweise pulverlacktypische UV-härtende Harze, wie z.B. UVECOAT 3001 der Fa. Cytec, USA.

Die Härter werden bevorzugt aus der Gruppe ausgewählt, die aus Hydroxyalkylamin-haltigen Verbindungen, Glycidylgruppen-haltigen Verbindungen, Epoxygruppen-haltigen Verbindungen, Triglycidylisocyanuraten und Mischungen davon besteht.

Als Härter werden ferner vorzugsweise Verbindungen verwendet, die zu den entsprechenden reaktiven Gruppen des Harzes chemische Antipoden darstellen. Beispielsweise können dies sein:
- Verbindungen aus der Gruppe der β-Hydroxyalkylamide, wie z.B. Primid XL 552, Fa. Ems-Primid, Schweiz
- Verbindungen basierend auf Glycidylfunktionen wie Triglycidylisocyanurat (bekannt unter der Bezeichnung TGIC), wie z.B. Araldit PT 810 oder Araldit PT 910, Fa. Huntsman, Schweiz
- Verbindungen auf Basis verkappter und freier Isocyanate wie Vestagon BF 1540, Fa. Degussa bzw. Vestagon BF 1530
- Epoxyhärter auf Basis organischer Salze wie Vestagon 831, Fa. Degussa, Deutschland.
- Härter, die einer Anregung durch Strahlung unterliegen, wie IRGACURE 2959 und IRGACURE 819, Fa. Ciba Spezialitätenchemie, Schweiz.
- Harze, die komplementäre Gruppen zu den o.g. Harzen aufweisen.

Die erfindungsgemäß beschichteten Perlglanzpigmente liegen vorzugsweise in Form eines staubarmen, rieselfähigen Pulvers vor, welches gegebenenfalls auch mit Lösemitteln, beispielsweise organischen Lösemitteln und/oder Wasser, angepastet werden kann. Die erfindungsgemäßen Perlglanzpigmente zeichnen sich somit durch eine hohe Flexibilität in der Anwendung aus.

Bei Pulverlackanwendungen ergibt sich eine hervorragende Recyclierbarkeit des Perlglanz-pigmentierten Pulverlackes. Der nicht auf einem Substrat ausgehärtete Anteil des Pulverlacks, der die erfindungsgemäßen Perlglanzpigmente enthält, kann vorteilhafterweise zurückgeführt werden und bei der nächsten Pulverlackapplikation erneut aufgesprüht werden. Aufgrund der Umhüllung der Perlglanzpigmente mit dem Bindemittel kommt es zu keiner Trennung von Perlglanzpigment und Bindemittel und somit auch zu keiner wesentlichen, vorzugsweise zu keiner, Änderung der relativen Mengenverhältnisse von Perlglanzpigment zu Bindemittel. Bei Applikation eines recycelten Pulverlacks werden mithin qualitativ hochwertige Lackierungen erhalten, die sich nicht von den Lackierungen unterscheiden, bei denen der erfindungsgemäße Pulverlack zum ersten Mal appliziert wurde.

Es ist bevorzugt, dass der Pulverlack und die Beschichtung der Perlglanzpigmente wenigstens ein gleiches oder dasselbe Bindemittel enthalten.
Vorteilhafterweise sind die zur Umhüllung des Perlglanzpigmentes verwendeten Bindemittel die gleichen, die in einem Pulverlack als Bindemittel verwendet werden. Damit eignen sich solche erfindungsgemäßen Bindemittel als Masterbatch oder Konzentrat zur Herstellung eines Perlglanzpigment-haltigen Pulverlacks.
Bei Verwendung von gleichen Bindemitteln in der Beschichtung der erfindungsgemäßen Perlglanzpigmente wie in dem Pulverlack kommt es nach Aufbringung und Aushärtung des Pulverlacks zur Ausbildung einer homogenen Lackschicht, in der die Perlglanzpigmente chemisch eingebunden sind. Solche Lackschichten weisen ein äußerst ansprechendes Aussehen auf und sind gegenüber mechanischen Belastungen sehr beständig.

Der Gehalt an Bindemittel bei den erfindungsgemäßen Perlglanzpigmenten beträgt vorzugsweise 20 bis 85 Gew.-%, bevorzugt 52 bis 75 Gew.-% und weiter bevorzugt 55 bis 60 Gew.-%, jeweils bezogen auf das Gesamtgewicht des beschichteten Perlglanzpigmentes.

Die Bindemittel polymerisieren vorzugsweise nicht bzw. nicht wesentlich bei der Beschichtung bzw. nach der Beschichtung der Perlglanzpigmente. Eine Polymerisation der die Perlglanzpigmente umhüllenden Bindemittel findet vorzugsweise erst beim Einbrennen des fertigen Lackes nach der Applikation der erfindungsgemäßen Perlglanzpigmente in dem Anwendungsmedium statt. In diesem Fall erfolgt die Polymerisation thermisch.

Es kann jedoch auch, bei radikalisch polymerisierenden Bindemitteln, eine Aushärtung mittels UV- oder IR-Strahlung erfolgen. Hierbei kann sowohl das Bindemittel des Lackes als auch das Bindemittel der Beschichtung polymerisieren.

Ein großer Vorteil der erfindungsgemäßen Perlglanzpigmente besteht hierbei u.a. in der viel besseren Anbindung der Perlglanzpigmente an das Bindemittel des Lackes oder der Druckfarbe. Dies ist insbesondere dann gegeben, wenn das gleiche Bindemittel als Beschichtung wie auch als Applikationsmedium verwendet wird.

Bei Pulverlackanwendungen sind somit wesentlich höhere Pigmentierungshöhen an Perlglanzpigmenten als bisher möglich, ohne das es dabei zu Entmischungen von Perlglanzpigment und Pulverlack kommt. Derartige Entmischungen führen zu sogenannten "Spuckern" in der Pulverlackbeschichtung und beeinträchtigen das Recyclierungsverhalten des Perlglanz-pigmentierten Pulverlackes. Höher pigmentierte Pulverlackierungen weisen einen stärkeren Periglanzeffekt und eine bessere Deckung auf.

Als Perlglanzpigmente können die im Handel erhältlichen üblichen Perlglanzpigmente vorzugsweise auf Basis plättchenförmiger, transparenter oder semitransparenter Substrate verwendet werden.
Die Perlglanzpigmente weisen vorzugsweise ein Substrat auf, welches aus der Gruppe, bestehend aus Glimmer, Talkum, Sericit, Kaolin sowie SiO₂-, Glas-, Graphit- oder Al₂O₃-Plättchen und deren Mischungen, entnommen wird.

Diese Substrate der Perlglanzpigmente sind vorzugsweise mit einer oder mehreren Schichten aus der Gruppe, bestehend aus Metalloxiden, Metallhydroxiden, Metalloxyhydraten, Metallsuboxiden, Metallsulfiden, Metallfluoriden, Metallchalkogeniden, Metallnitriden, Metallsulfiden, Metallcarbiden und deren Mischungen, beschichtet.

Besonders bevorzugt ist hierbei die Beschichtung mit Metalloxiden. So sind beispielsweise die Substrate der Perlglanzpigmente mit einer oder mehreren Metalloxiden aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet. Es können aber auch die korrespondierenden Hydroxide oder Oxidhydrate als Beschichtung aufgebracht sein. Selbstverständlich können auch Mischschichten aus den vorgenannten Oxiden sowie den korrespondierenden Hydroxiden und/oder Oxidhydraten aufgebracht sein.

Besonders bevorzugt sind TiO₂ und Fe₂O₃, wobei das TiO₂ in Anatas- und/oder Rutilmodifikation vorliegen kann.

Bei weiteren Ausführungsformen sind die Substrate der Perlglanzpigmente mit einem mehrschichtigen Schichtaufbau, der Schichten mit oder aus Metalloxid,Metallhydroxid, Metallsuboxid und/oder Metalloxidhydrataufweist, beschichtet.

Die Metalloxide, Metallsuboxide, Metallhydroxide und/oder Metalloxidhydrate können dabei miteinander gemischt in einer Schicht oder in aufeinanderfolgenden Schichten getrennt voneinander angeordnet sein.

Dieser mehrschichtige Schichtaufbau mit oder aus Metalloxid, Metallhydroxid, Metallsuboxid und/oder Metalloxidhydrat umfaßt bei einer bevorzugten Variante eine alternierende Schichtenfolge. Dabei kann auf dem Substrat zunächst wenigstens eine hochbrechende Schicht, nachfolgend wenigstens eine niedrigbrechende Schicht und schließlich wieder wenigstens eine hochbrechende Schicht angeordnet sein. Bevorzugt sind bei einer solchen alternierenden Schichtenfolge eine hochbrechende, eine niedrigbrechende, eine hochbrechende, etc. Schicht unmittelbar aufeinanderfolgend angeordnet. Es ist aber auch möglich ein Schichtpakt aus zwei oder mehr hochbrechende Schichten, ein Schichtpaket aus zwei oder mehr niedrigbrechenden Schichten und wiederum ein Schichtpakt aus zwei oder mehr hochbrechenden Schichten, etc. in aufeinanderfolgender Weise auf dem Substrat anzuordnen.

Die hochbrechende(n) Schicht(en) bzw. niedrigbrechende(n) Schicht(en) können dabei jeweils Metalloxid, Metallhydroxid, Metallsuboxid und/oder Metalloxidhydrat aufweisen oder daraus bestehen.

Perlglanzpigmente mit der vorstehend beschriebenen alternierenden Schichtenfolge weisen intensivere Interferenzeffekte auf.

Vorzugsweise wird das hochbrechende Metalloxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und Mischungen davon, ausgewählt. Das niedrig brechende Metalloxid wird vorzugsweise aus der Gruppe, bestehend aus SiO₂, Al₂O₃ und Mischungen davon, ausgewählt.

Bei einer besonderen Ausführungsform weisen die zu beschichtenden Perlglanzpigmente Glasflakes als Substrat auf und besitzen beispielsweise folgende Schichtstrukturen:

| | | | | |
|---|---|---|---|---|
| Glass flakes + TiO₂ + SiO₂ + TiO₂ | | | | |
| Glass flakes + TiO₂ + SiO₂ + Fe₂O₃ | | | | |
| Glass flakes + TiO₂ + SiO₂ + TiO₂/Fe₂O₃ | | | | |
| Glass flakes + TiO₂ + SiO₂ + (Sn,Sb)O₂ | | | | |
| Glass flakes + (Sn,Sb)O₂ + SiO₂ + TiO₂ | | | | |
| Glass flakes + Fe₂O₃ + SiO₂ + (Sn,Sb)O₂ | | | | |
| Glass flakes + TiO₂/Fe₂O₃ + SiO₂ + TiO₂/Fe₂O₃ | | | | |
| Glass flakes + TiO₂ + SiO₂ + MoS₂ | | | | |
| Glass flakes + TiO₂ + SiO₂ + Cr₂O₃ | | | | |
| Glass flakes + Cr₂O₃ + SiO₂ + TiO₂ | | | | |
| Glass flakes + Fe₂O₃ + SiO₂ + TiO₂ | | | | |
| Glass flakes + TiO₂ + Al₂O₃ + TiO₂ | | | | |
| Glass flakes + Fe₂TiO₅ + SiO₂ + TiO₂ | | | | |
| Glass flakes + TiO₂ + SiO₂ + Fe₂TiO₅/TiO₂ | | | | |
| Glass flakes + TiO₂ suboxide + SiO₂ + TiO₂ suboxide | | | | |
| Glass flakes + TiO₂ + SiO₂ + TiO₂ + SiO₂ + TiO₂ | | | | |

Bei einer weiteren Ausführungsform bestehen die Perlglanzpigmente aus Glassplättchen, welches beidseitig mit semitransparenten Metallschichten beschichtet ist.

Diese semitransparenten Metallschichten sind vorzugsweise aus der Gruppe, bestehend aus Silber, Aluminium, Chrom, Nickel, Gold, Platin, Palladium, Kupfer, Zink, deren Mischungen und deren Legierungen, ausgewählt.

Weiterhin können die mit einer oder mehreren Metalloxidschichten beschichteten Substrate der Perlglanzpigmente zusätzlich mit mindestens einer schützenden Metalloxid-, Metallhydroxid, und/oder Metalloxidhydratschutzschicht umhüllend beschichtet sein. Die Metalle werden dabei vorzugsweise aus der Gruppe, die aus Silicium, Aluminium, Cer, Mangan, Zirkonium, Chrom und Mischungen davon besteht ausgewählt. Derartige Perlglanzpigmente sind in der Regel wetterstabil.

Schließlich können die Perlglanzpigmente auch aus einem einzigen plättchenförmigen Material bestehen, wobei das Material aus der Gruppe, bestehend aus Bismuthoxychlorid, TiO₂ und Fe₂O₃, ausgewählt ist.

Vorzugsweise werden die Perlglanzpigmente aus der Gruppe, bestehend aus Bismuthoxychloridpigmenten, Metalloxid beschichteter Glimmer, Metalloxid beschichtete SiO₂-Plättchen, Metalloxid beschichtete Al₂O₃-Plättchen, Metalloxid beschichtete Glasplättchen und deren Mischungen, ausgewählt.

Beispielsweise können die von der Firma Merck KGaA, Darmstadt, Deutschland unter den Marken Iriodin^{®}, Florapearl^{®}, Solarflair^{®}, Lazerflair^{™}, Biflair^{®}, Minatec^{®}, Miraval^{®}, Xirallic^{®} oder Colorstream^{®}, die von der Firma Engelhard, USA unter den Markennamen Mearlin^{®} oder Exterior Mearlin^{®} sowie die von der Firma Eckart unter den Marken Prestige^{®} oder Phoenix^{®} vertriebenen Perlglanzpigmente verwendet werden.

Die Perlglanzpigmente als solche können unbeschichtet, jedoch auch bereits vorbeschichtet sein, d.h. zusätzliche Schutzschichten aufweisen. Hierbei kann es sich um Barriereschichten wie SiO₂ oder polymerisierte, hochvernetzte Polymerschichten handeln.

Bei einer weiteren erfindungsgemäßen Weiterbildung können auch weitere in Lacken und Pulverlacken übliche Zusatz- und/oder Hilfsstoffe in-der Beschichtung enthalten sein, so dass die erfindungsgemäßen Perlglanzpigmente maßgeschneiderte Anwendungseigenschaften im Anwendungsmedium besitzen.

Bei einer erfindungsgemäßen Weiterbildung können derartige Zusatz- und/oder Hilfsstoffe organische und/oder anorganische Buntpigmenten sowie Farbstoffen umfassen. Auf diese Weise sind eingefärbte Perlglanzpigmente zugänglich . Hiermit können insbesondere farbige Effektpulverlacke mit hoher mechanischer Stabilität hergestellt werden:
**(a) Buntpigmente**
   i) organische Buntpigmente
      Bei organischen Buntpigmente kommen handelsübliche Pigmente der Klassen Monoazo-, Bisazo-, Antrachinon-, Phthalocyanin-Blau, Phthalocyanin-Grün, Perylen-, Perinonpigmente, Indigo-, Thioindigo-, Indolinon-, Isoindolinonpigmente, Chinacridon, Pyrrolopyrrolidon-, Dioxazinpigmente sowie Metallkomplexpigmente wie beispielsweise Kupferazomethin Gelb sowie weitere in Herbst/Hunger "Industrielle org. Pigmente', VCH Verlagsgesellschaft mbH, Weinheim, Deutschland (1987) aufgeführte Klassen und Pigmente.
   ii) anorganische Buntpigmente
      Bei anorganischen Buntpigmenten handelt es sich um Eisenoxid-Pigmente, Bleichromat-Pigmente, Chromoxid-Pigmente, Ultramarin-Pigmente, komplexe anorganische Bunt-Pigmente, Eisenblau-Pigmente, Cadmium-Pigmente, Wismutvanadat-Pigmente, Cersulfid-Pigmente sowie handelsübliche Titandioxid- und Zinksulfid- Weißpigmente sowie weitere in 'Aktuelle anorg. Buntpigmente' Vincentz-Verlag, Hartmut Endriss aufgeführte Klassen und Pigmente.
**(b) Farbstoffe**
   Zum Einsatz kommen dem Anwendungsfall entsprechende migrationsstabile Farbstoffe wie z.B. mit Azoliganden komplexierte Schwermetallsalze, metallorganische Verbindungen, die mindestens eine Azo- undloder chromophore Gruppe enthalten und in dem eingesetzten Medium löslich sind, beispielsweise Solvent Yellow 79, Solvent Red 8, Solvent Blue 45 und Solvent Black 45, erhältlich bei Fa. Clariant, Basel, Schweiz.

Vorzugsweise werden die derartige Zusatz- und/oder Hilfsstoffe aus der Gruppe ausgewählt, die Additive, wie viskositätsvermindernde Additive, Slipmittel, Verlaufsmittel sowie Füllstoffe, Entgasungsmittel, filmbildende Hilfsmittel, Flammschutzmittel, Haftvermittler, Lichtschutzmittel, Mattierungsmittel, Photoinitinitiatoren, Polymerisationsinhibitoren, Polymerisationsinitiatoren, Radikalfänger, Rieselhilfen, strahlungshärtende Reaktivverdünner, thermisch vernetzbare Reaktivverdünner, UV-Absorber, Vernetzungskatalysatoren, Wachse und Mischungen davon umfassen.

Als viskositätsvermindernde Additive werden bevozugt polyestermodifizierte Polydimethylsiloxane verwendet. Beispiele hierfür sind BYK 333, BYK 306, BYK 341 oder auch BYK 310 der Fa. Byk-Chemie, Wesel, Deutschland.

Bei einer erfindungsgemäßen Weiterbildung ist ebenfalls eine Vorbeschichtung des Perlglanzpigmentes mit einer Substanz möglich, die die Haftung zwischen Perlglanzpigmentoberfläche und Bindemittelumhüllung verbessert. Dies können z.B. funktionalisierte Silane, funktionalisierte Polymere und phosphororganische Verbindungen, wie Phosphorsäureester sein. Diese können auch auf der zusätzlichen Beschichtung aufgebracht werden.

Die erfindungsgemäßen Perlglanzpigmente können in Beschichtungszusammensetzungen, einem Masterbatch oder einem Pulverlack auch zusammen mit weiteren Pigmenten verwendet werden.

Gemäß einer bevorzugten Ausführungsform können die erfindungsgemäßen Perlglanzpigmente zusammen mit korrosionsstabilisierten Metallpigmenten oder Metalleffektpigmenten verwendet werden. Perlglanzpigmente können nicht korrodieren und eignen sich mithin für Beschichtungen, die korrodierenden Bedingungen bspw. der natürlichen Bewitterung ausgesetzt sind. Gemische aus erfindungsgemäßen Perlglanzpigmenten und korrosionsstabilisierten Metalleffektpigmenten können in Pulverlacksystemen, die zur PulverlackBeschichtung von beispielsweise einem Fassadenelement, vorzugsweise eine Fassadenplatte, ein Fensterrahmen, eine Fahrzeugkarosserie, vorzugsweise eine Karosserie eines Kraftfahrzeuges, oder ein Rahmen eines Fahrzeugs, vorzugsweise eines Fahrrads oder Motorrads, verwendet werden, eingesetzt werden. In dem Pulverlack können neben den erfindungsgemäßen beschichteten Perlglanzpigmente diejenigen verwendet werden, die in der DE 103 61 437.0 offenbart sind, die hiermit unter Bezugnahme aufgenommen ist.

Überraschenderweise wurde gefunden, daß die erfindungsgemäß mit Bindemittel umhüllten Pigmente auch als Masterbatch im Pulverlack verwendet werden können. Im Fall eines Masterbatches beträgt der Gehalt an Bindemittel vorzugsweise 50 bis 85 Gew.-%, bevorzugt 55 bis 80 Gew.-% und weiter bevorzugt 60 bis 75 Gew.-%.

Masterbatche werden üblicherweise in Kunststoffen verwendet. Hier ist ein Masterbatch ein hoch pigmentierter Kunststoff, der dem Kunststoffmedium im Extruder zugegeben wird.

In der Pulverlacktechnologie stellt ein nach einem herkömmlichen Bonding-Verfahren hergestelltes Perlglanzpigment eine Art Vorform eines Masterbatches dar. Unter Bonding-Verfahren versteht man einen Mischvorgang von Pulverlack und Perlglanzpigment, bei dem durch Erwärmen der Mischung bis an die Glastemperatur des Pulverlackes eine physikalische Anbindung der Perlglanzpigmentteilchen an die Pulverlackteilchen erreicht wird. Bei dem Bonding-Verfahren erfolgt mithin eine Anhaftung der Perlglanzpigmente an die Oberfläche der Pulverlackteilchen. Bei Perlglanzpigmenten sind jedoch lediglich Pigmentierungshöhen von ca. maximal 6-8 Gew.-%, in der Praxis eher von 5 - 6 Gew-% erreichbar.

Mit den erfindungsgemäß beschichteten Perlglanzpigmenten können wesentlich höhere Konzentrationen an Perlglanzpigment erreicht werden, so daß man hier wirklich von einem Masterbatch sprechen kann. Dies gilt insbesondere für den Fall, dass das Perlglanzpigment mit dem gleichen Bindemittelsystem beschichtet wird, in das es später - beispielsweise in einem Pulverlack - auch eingearbeitet und verarbeitet wird.

Bei der vorliegenden Erfindung ist äußerst vorteilhaft möglich, einen Masterbatch oder eine Beschichtungszusammensetzung mit einem Perlglanzpigmentgehalt von vorzugsweise 0,5 bis 15 Gew.-%, weiter vorzugsweise von 1 bis 12 Gew.-%, weiter vorzugsweise von 2 bis 12 Gew.-%, weiter bevorzugt von 6 bis 10 Gew.-%, jeweils bezogen auf das Gesamtgewicht des Masterbatches oder der Beschichtungszusammensetzung, bereitzustellen.

Die bei der vorliegenden Erfindung mögliche hohe Pigmentierung von Masterbatch und Beschichtungszusammensetzung eröffnet völlig neue Möglichkeiten. Beispielsweise ist die Verwendung von hochpigmentierten bzw. hochkonzentrierten Masterbatchen beim Transport ein großer Vorteil. Aufgrund der höheren Konzentration des Masterbatches müssen - bei gleicher Endkonzentration beispielsweise in einem Pulverlack - geringere Mengen verwendet und mithin transportiert werden.

In einer Beschichtungszusammensetzung ermöglicht die höhere Konzentration von Perlglanzpigmenten eine erhöhte Deckung eines zu beschichtenden Substrats mit Perlglanzpigmenten, die mit herkömmlichen Pulverlacksystemen nicht möglich sind.

Die in bezug auf die erfindungsgemäßen Perlglanzpigmente bzw. Beschichtungszusammensetzung gemachten Ausführungen gelten entsprechend bei der Erläuterung des erfindungsgemäßen Verfahrens.

Die Perlglanzpigmente sind im organischen Lösemittel unlöslich und bilden mit dem Lösemittel bzw. in im Lösemittel gelösten Verbindungen eine Dispersion. Die Bindemittel und ggfs. weiter verwendeten Zusatz- und/oder Hilfsstoffe, beispielsweise Härter, sind im vorzugsweise organischen Lösemittel löslich, können im Fall einer Unlöslichkeit jedoch auch als Dispersion vorliegen.

Vorzugsweise werden den in Lösemittel gelöstem oder dispergiertem oligomeren und/oder polymeren Bindemittel, vor dem Inkontaktbringen mit den Perlglanzpigmenten, weitere Zusatz- und/oder Hilfsstoffe zugesetzt.

Die vorzugsweise zu verwendenden Zusatz- und/oder Hilfsstoffe sind weiter oben bereits angegeben worden. Bei Einarbeitung der Zusatz- und/oder Hilfsstoffe in eine Lösung oder Dispersion aus polymeren oder oligomeren Bindemitteln wird vorteilhaft eine gleichmäßige Verteilung der Zusatz- und/oder Hilfsstoffe in der auf den Perlglanzpigmenten aufgebrachten Beschichtung erhalten.

Die Zusatz- und/oder Hilfsstoffe können beispielsweise Härter, Photoinitiatoren und/oder Polymerisationsinitiatoren umfassen. Die Zusatz- und/oder Hilfsstoffe sind bereits oben im Detail aufgeführt worden.

Als Lösemittel können Wasser, organische Lösemittel oder Wasser-haltige organische Lösemittel verwendet werden. Bevorzugt werden organische Lösemittel und besonders bevorzugt leicht flüchtige organische Lösemittel wie beispielsweise Aceton und/oder Ethylacetat verwendet.

Das Entfernen des Lösemittels bzw. das Trocknen der beschichteten Perlglanzpigmente erfolgt vorzugsweise unter gleichzeitiger oder nachfolgender Verwirbelung der beschichteten Perlglanzpigmente.

Die Verwirbelung der beschichteten Perlglanzpigmente verhindert zuverlässig eine Aggregation oder Agglomeration der Perlglanzpigmente. Da die Perlglanzpigmente in einer aufgebrachten Lackierung gleichsam als eine Vielzahl kleiner optisch aktiver Elemente wirken, sollte eine Agglomeration der Perlglanzpigmente vermieden werden, um eine Beeinträchtigung des Perlglanzeffektes der Beschichtung zu vermeiden.

Vorzugsweise werden die Schritte (bi) und (c) in einer ersten Verfahrensvariante zusammengefasst, in der das Versprühen der beschichteten Perlglanzpigmente und das Entfernen des Lösemittels durch Sprühtrocknen erfolgt.

Die Sprühtrocknung ist ein besonders kostengünstiges Trocknungsverfahren, welches gleichzeitig hohe Durchsätze gewährleistet. Bei der Sprühtrocknung ist sowohl ein Batch-Betrieb als auch ein kontinuierlicher Betrieb möglich.

Bei der Sprühtrocknung wird die Dispersion unter geeignetem Sprühdruck in einen umschlossenen Anlagenraum verdüst bzw. zerstäubt. Der Sprühdruck wird in Abhängigkeit von den äußeren Bedingungen wie Feststoffgehalt, Viskosität der zu versprühenden Dispersion, Temperatur im Reaktor, Art des Lösemittels, etc. eingestellt und kann vom Fachmann ohne weiteres ermittelt werden. Vorzugsweise findet die Verdüsung in einen Gasstrom, beispielsweise Luft oder Stickstoff, statt. Die sich bildenden Tröpfchen führen aufgrund der starken Oberflächenvergrößerung zu einer starken Verdunstung des Lösemittels, was noch durch eine erhöhte Temperatur der Förderluft verbessert werden kann. Die Temperatur wird dabei so gewählt, daß keine wesentliche Polymerisation bzw. Aushärtung der reaktiven Beschichtung auf den Perlglanzpigmenten erfolgt.

Bei der Sprühtrocknung kann die Zerstäubung durch Zentrifugalzerstäuber, wie Zerstäuberscheiben bzw. Zerstäuberräder, durch Druckdüsen oder Zweistoffdüsen erfolgen. Der Gasstrom kann entweder im Gleichstrom oder im Gegenstrombetrieb die Anlage durchlaufen. Bei einer Sprühtrocknung im Mischstrom sind die Düsen im unteren Teil des Trockenturmes angebracht. Die Versprühung erfolgt hierbei springbrunnenartig nach oben. Die Abscheidung des Produktes aus dem Gasstrom erfolgt unter dem Sprühturm, durch einen Zyklon und einen Filter.
Des weiteren kann zur Trocknung der zu versprühenden Suspension ein Kombinationsverfahren, der sog. Fluidisierte Sprühtrockner eingesetzt werden. Dieses Verfahren vereinigt die Vorteile der Sprühtrocknung feiner Tröpfchen mit der Wirbelbetttrocknung. Es können selbstverständlich auch andere Sprühtrocknungsverfahren verwendet werden.

Gemäß einer weiteren bevorzugten Ausführungsform werden die Schritte (bii) und (c) zusammengefasst, indem das Beschichten und Trocknen der Perlglanzpigmente in einem Fluidbett oder einer Wirbelschicht erfolgt, wobei die im Lösemittel gelösten oder dispergierten oligomeren und/oder polymeren Bindemittel eingesprüht werden und das Lösemittel während der Verwirbelung in dem Fluidbett oder der Wirbelschicht entfernt wird.

Diese Verfahrensvariante entspricht einer Fluidbettbeschichtung. Dabei wird das Pigment in einer geschlossenen Sprühtrocknungsapparatur vorgelegt und durch Einblasen von Druckluft oder unter Druck stehendem Stickstoff fluidisiert. Die Druckluftmenge bzw. Druckstickstoffmenge wird dabei so gewählt, daß eine ruhige und nicht turbulente Oberfläche entsteht. Die Bindemittel-Lösung bzw. -Dispersion wird dann durch eine Düse gefördert und in das bewegte Fluidbett gesprüht. Das Lösemittel kann dann wie bei der ersten Verfahrensvariante, beispielsweise durch Wärmebeaufschlagung, entfernt und das erfindungsgemäße Perlglanzpigment getrocknet werden.

Die Pigment/Bindemittel/Lösemittel-Dispersionen für die Sprühtrocknung bzw. die Bindemittel-Lösung bzw. -Dispersion für die Fluidbettbeschichtung können bspw. mit folgenden organischen Lösemitteln hergestellt werden: Alkohole, Ether, Ester, Ketone sowie aliphatische und aromatische Kohlenwasserstoffe mit einem Siedepunkt von unter 130 °C. Besonders bevorzugt sind Aceton und Ethylacetat. Es können aber auch Mischungen der vorgenannten organischen Lösemittel verwendet werden. Wasser bzw. Wasser-Lösemittelgemische können ebenfalls verwendet werden.

Die Dispersion ist vorzugsweise flüssig genug, um problemlos durch eine Düse versprühbar zu sein. Der Lösemittelgehalt der Dispersion beträgt vorzugsweise 50 bis 97 Gew.-%, bevorzugt 50 bis 85 Gew.-% und weiter bevorzugt 50 bis 75 Gew.-%, jeweils bezogen auf das Gesamtgewicht der Dispersion.

Der Druck mit dem die Druckluft bzw. der Stickstoff in die Apparatur eingelassen wird, beträgt vorzugsweise 1 bis 5 bar, weiter bevorzugt 2 - 4 bar.

Die Temperatur zur Abdunstung des Lösemittels hängt wesentlich von der Natur des Lösemittels ab. Bevorzugt sind Temperaturen von 0 bis 130 °C, besonders bevorzugt 20 bis 80 °C.

Vorzugsweise wird die Temperatur so gewählt, dass das Lösemittel gut verdampft und die Bindemittelbeschichtung nicht wesentlich polymerisiert, vorzugsweise nicht polymerisiert. Ein leichtes Anpolymerisieren des Bindemittels ist jedoch nicht ausgeschlossen und auch unerheblich, solange noch eine spätere ausreichende Reaktionsfähigkeit des Bindemittels gegeben ist.

Das nach beiden Verfahrensvarianten hergestellte erfindungsgemäße Perlglanzpigment ist ein staubarmes, rieselfähiges Pulver mit einer Korngröße von d₅₀ 2 bis 190 µm, bevorzugt von 5 bis 100 µm. Es handelt sich mithin nicht um ein Granulat. Granulate haben eine Größe, die üblicherweise im Bereich von Millimetern liegt.

Das erfindungsgemäße Perlglanzpigmentpulver kann mit einer geeigneten Flüssigphase, vorzugsweise einem Lösemittel, versetzt werden, um es in Form einer Paste bereitstellen zu können. Dabei beträgt der Pigmentanteil der Paste vorzugsweise 30 bis 80 Gew.-%, bezogen auf das Gesamtgewicht der Paste.

Als Lösemittel zum Anpasten werden vorzugsweise Wasser oder organische Lösemittel wie aliphatische Kohlenwasserstoffe ("Testbenzin"), aromatische Kohlenwasserstoffe (Solvent Naphta), Alkohole, Ester, Ketone, Aldehyde, Ether oder Mischungen davon verwendet. Hierbei sollten jedoch Lösemittel verwendet werden, die das Bindemittel vom Perlglanzpigment nicht wieder ablösen.

Das erfindungsgemäß beschichtete Perlglanzpigment wird vorzugsweise bei der Herstellung von Farben, Lacken, Pulverlacken, Druckfarben, Kunststoffen und Kosmetika verwendet.

Die folgenden Beispiele und Figuren erläutern die Erfindung, ohne sie zu beschränken.

**Beispiel 1:** Es wurden 125 g eines gesättigten Polyesters mit der Säurezahl 70 (Crylcoat 1540-0 (Fa. Cytec, USA) sowie 125 g eines Epoxyharzes mit einem Epoxyäquivalentgewicht von 750 (Araldit GT 6063 ES, Fa. Huntsman, Schweiz) in 1800 g Aceton gelöst und 250 g PHOENIX PX 1001 (d₅₀ = 21 µm) (erhältlich bei Fa. Eckart, Fürth, Deutschland) eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 483 g Pigment-Polymerpräparation erhalten.

Diese Pigment-Polymerpräparation wird mit einem handelsüblichen Pulverlack (z.B. Polyester-Primidsystem, Fa. DuPont, Essenbach, Deutschland) im Verhältnis 1:9 (a, 5 % Pigmentgehalt) bzw. 1:4 (b, 10 % Pigmentgehalt) homogen gemischt.

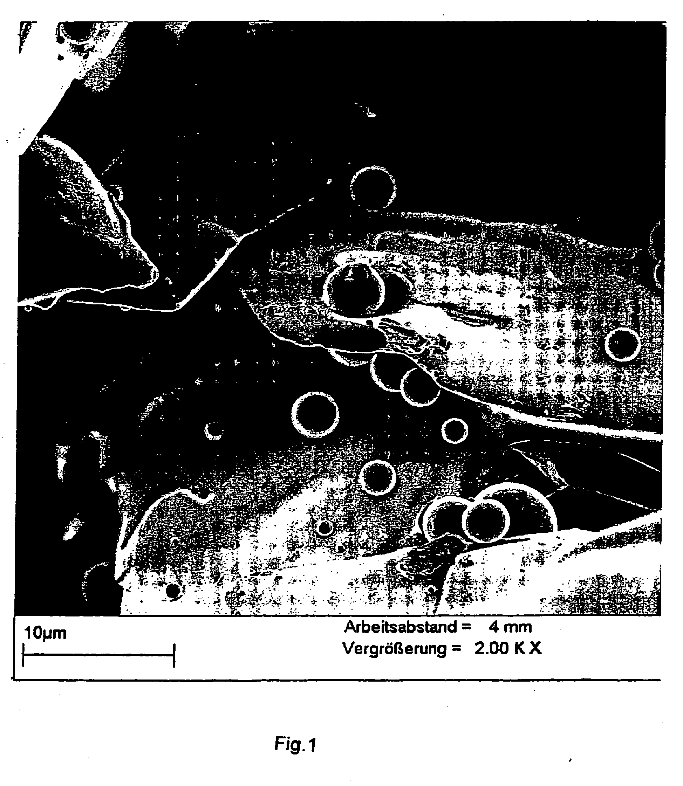

In Fig. 1 ist eine rasterelektronenmikroskopische Aufnahme des gemäß dem erfindungsgemäßen Beispiel 1 beschichteten Perlglanzpigmentes abgebildet. Fig.1 zeigt deutlich, daß die erfindungsgemäß beschichteten Perlglanzpigmente überraschenderweise in nicht-agglomerierter Form vorliegen. Des weiteren sind kugelförmige Bindemittelpartikel zu erkennen, die aus Nebenfällungen von Bindemittel entstehen. Das Vorliegen von kugelförmigen Bindemittelpartikeln neben den erfindungsgemäß beschichteten Perlglanzpigmenten ist charakteristisch für die erfindungsgemäßen Perlglanzpigmente.

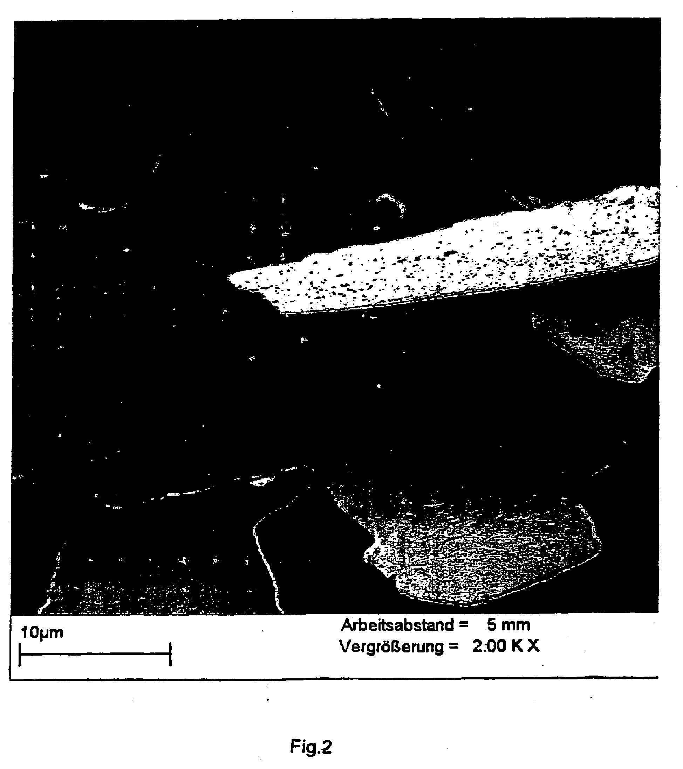

In Fig. 2 ist das Ausgangspigment ohne Beschichtung gezeigt.

Der Vergleich dieser beiden Figuren zeigt, daß die erfindungsgemäßen Pigmente von der Bindemittelbeschichtung vollständig umhüllt sind.

**Beispiel 2:** Es wurden 125 g eines gesättigten Polyesters mit der Säurezahl 70 (Crylcoat 1540-0 (Fa. Cytec, USA) sowie 125 g eines Epoxyharzes mit einem Epoxyäquivalentgewicht von 750 (Araldit GT 6063 ES, Fa. Huntsman, Schweiz) in 1800 g Aceton gelöst und 250 g PHOENIX XT 1001 (d₅₀ = 21 µm)[Chrom(III)-hydroxid-stabilisiertes Perlglanzpigment für Außenanwendungen, erhältlich bei Fa. Eckart, Fürth, Deutschland] eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 491 g Pigment-Polymerpräparation erhalten.
Diese Pigment-Polymerpräparation wird mit einem handelsüblichen Pulverlack (z.B. Polyester-Primidsystem, Fa. DuPont, Essenbach, Deutschland) im Verhältnis 1:9 (a, 5 % Pigmentgehalt) bzw. 1:4 (b, 10 % Pigmentgehalt) homogen gemischt.

**Beispiel 3:** Es wurden 237,5 g eines gesättigten Polyesters mit der Säurezahl 70 (Crylcoat 1540-0 (Fa. Cytec, USA)) sowie 237,5 g eines Epoxyharzes mit einem Epoxyäquivalentgewicht von 750 (Araldit GT 6063 ES, Fa. Huntsman, Schweiz) in 1800 g Aceton gelöst und 25 g PHOENIX XT 1001 (d₅₀ = 21 µm) (Chrom(III)-hydroxid-stabilisiertes Perlglanzpigment für Außenanwendungen, erhältlich bei Fa. Eckart, Fürth, Deutschland] eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 478 g Pigment-Polymerpräparation erhalten.
Diese Pigment-Polymerpräparation wird ohne weitere Behandlung direkt im gängigen Pulverlackverfahren appliziert.

**Beispiel 4:** Es wurden 12,5 g eines gesättigten Polyesters mit der Säurezahl 70 (Crylcoat 1540-0 (Fa. Cytec, USA) sowie 12,5 g eines Epoxyharzes mit einem Epoxyäquivalentgewicht von 750 (Araldit GT 6063 ES, Fa.Huntsman, Schweiz) in 1800 g Aceton gelöst und 475 g PHOENIX XT 1001 (d₅₀ = 21 µm) [Chrom(III)-hydroxid-stabilisiertes Perlglanzpigment für Außenanwendungen, erhältlich bei Fa. Eckart, Fürth, Deutschland] eingerührt. 2300 g der Dispersion wurden in einem Sprühtrockner bei einer Rate von 30 g/min und einem Spritzdruck von 2,5 bar in einem 55 °C warmen Luftstrom versprüht. Nach Trocknung wurde eine Ausbeute von 483 g Pigment-Polymerpräparation erhalten.
Diese Pigment-Polymerpräparation wird mit einem handelsüblichen Pulverlack (z.B. Polyester-Primidsystem, Fa. DuPont, Essenbach, Deutschland) im Verhältnis 1:18 (a, 5 % Pigmentgehalt) bzw. 1:9 (b, 9.5 % Pigmentgehalt) homogen gemischt.

### Vergleichsbeispiel 5, Dryblendverfahren:

Ausgehend von PHOENIX XT 1001 (d₅₀ = 21 µm) (erhältlich bei Fa. Eckart, Fürth, Deutschland) und einem handelsüblichen Pulverlack (z.B. Polyester-Primidsystem, Fa. DuPont, Essenbach, Deutschland) wird eine Trockenmischung eines applizierfähigen Pulverlacks hergestellt. In der Trockenmischung liegen die Perlglanzpigmente PHOENIX XT und Pulverlackpartikel nebeneinander vor, sind aber nicht miteinander verbunden. Die Pigmentierungshöhe beträgt 5 % (Vergleichsbsp. 1a) bzw. 10 % (Vergleichsbsp. 1b)

### Vergleichsbeispiel 6, Bondingverfahren:

Ausgehend von PHOENIX XT 1001 (d₅₀ = 21 µm) (erhältlich bei Fa. Eckart, Fürth, Deutschland) und einem handelsüblichen Pulverlack (z.B. Polyester-Primidsystem, Fa. DuPont, Essenbach, Deutschland) wird nach einem marktüblichen Bondingprozess (z.B. STARBONDING, Fa. ECKART GmbH & Co. KG) eine Bondingpräparation eines applizierfähigen Pulverlacks hergestellt. Die Pigmentierungshöhe beträgt 5 % (Vergleichsbeispiel 6a) 7,5 % (Vergleichsbsp. 6b) bzw. 10 % (Vergleichsbsp. 2c)

Zur Beurteilung der optischen und applikationstechnischen Eigenschaften wurden die Pulverlacke elektrostatisch lackiert, eingebrannt und visuell beurteilt. Die nach dem erfindungsgemäßen Verfahren hergestellten Pulverlacke zeigen selbst bei Pigmentierungshöhen von bis zu 10 % ein einheitliches Spritzbild sowie einen ausgezeichneten Perlglanzeffekt mit ausgeprägter Tiefenwirkung. Darüber hinaus ist die ausgezeichnete Recyclierbarkeit der erfindungsgemäß beschichteten Perlglanzpigmente vorteilhaft: Während die Applikation herkömmlicher Perlglanzpigmente (Vergleichsbeispiel 1) nach der Zyklonierung erhebliche Farbverschiebungen durch die teilweise Entmischung von Pigment und Pulverlack zeigt, sind bei Einsatz der erfindungsgemäß beschichteten Perlglanzpigmente auch nach dreifachem Zyklondurchlauf des Pulverlackes keine Veränderungen in der Applikation festzustellen.

Ein weiterer Vorteil der erfindungsgemäß beschichteten Perlglanzpigmente zeigt sich in der verbesserten Verarbeitung während der Pulverbeschichtung. Bei sehr unterschiedlichem elektrostatischem Aufladeverhalten von Perlglanzpigment und Pulverlackbindemittel kommt es zu einer Agglomeratbildung in der Spritzpistole. Diese führt zur Entstehung von Pigmentklumpen ("Spucker") in der Spritzapplikation. Beurteilt man diese Klumpenbildung visuell in einem Notensystem nach DIN 53 230, so ergeben sich folgende Benotungen:
Note 0: keine Klumpenbildung
Note 1: erste visuell wahrnehmbare Klumpenbildung
Note 2: schwache Klumpenbildung
Note 3: mittlere Klumpenbildung
Note 4: starke Klumpenbildung
Note 5: sehr starke Klumpenbildung

Die Ergebnisse sind in der nachfolgenden Tabelle zusammengefaßt.

| Beispiel | Pigmentierung | Glanz | Klumpenbildung |
|---|---|---|---|
| 1 a) | 5 % | exzellent | 0 |
| 1 b) | 10 % | gut | 1 |
| 2 a) | 5 % | exzellent | 0 |
| 2 b) | 10 % | exzellent | 1 |
| 3 | 5 % | exzellent | 0 |
| 4 a) | 5 % | exzellent | 0 |
| 4 b) | 9.5 % | exzellent | 0 |
| Vergleichsbeispiel | | | |
| 5a) | 5% | gut | 3 |
| 5 b) | 10 % | mäßig | 5 |
| 6 a) | 5 % | exzellent | 1 |
| 6 b) | 7.5 % | mäßig | 4 |
| 6 c) | 10 % | mäßig | 5 |

Die erfindungsgemäß mit Bindemitteln umhüllten Perlglanzpigmente lassen sich demnach selbst in einer einfachen Dry-Blend Verarbeitung erheblich besser applizieren als gebondete Perlglanzpigmente.

## Patentansprüche

1. Verfahren zur Herstellung von beschichteten Perlglanzpigmenten, wobei die Beschichtung die Perlglanzpigmente umhüllt und nicht ausgehärtetes, jedoch chemisch vernetzbare(s) und/oder unter Einwirkung von Wärme, IR-Strahlung, UV-Strahlung und/oder Elektronenstrahlen vemetzbare(s) oligomere(s) und/oder polymere(s) Bindemittel umfasst, und das Verfahren die folgenden Schritte umfasst:
a) Herstellen einer Lösung oder Dispersion eines oligomeren und/oder polymeren Bindemittels in einem Lösemittel, bevorzugt einem organischen Lösemittel,
b) Beschichten der Perlglanzpigmente mit dem Bindemittel durch
i) Dispergieren des Perlglanzpigmentes in der Lösung oder Dispersion von a) und anschließendem Sprühtrocknen dieser Dispersion oder
ii) Versprühen der Lösung oder Dispersion aus a) auf in einem Gasstrom verwirbelte Perlglanzpigmente,
c) Trocknen der mit Bindemittel beschichteten Perlglanzpigmente in einem bewegten Gasstrom.

2. Verfahren zur Herstellung von beschichteten Perlglanzpigmenten nach Anspruch 1,
**dadurch gekennzeichnet,**
**daß** die Korngröße d₅₀ der beschichteten Perlglanzpigmente in einem Bereich von 2 bis 190 µm liegt.

3. Verfahren zur Herstellung von beschichteten Perlglanzpigmenten nach Anspruch 1 oder 2,
**dadurch gekennzeichnet,**
**daß** die Korngröße d₅₀ der beschichteten Perlglanzpigmente in einem Bereich von 5 bis 100 µm liegt.

4. Verfahren nach einem der vorhergehenden Ansprüche,
**dadurch gekennzeichet,**
**daß** die Perlglanzpigmente 20 bis 85 Gew.-% an oligomerem und/oder polymerem Bindemittel aufweisen, bezogen auf das Gesamtgewicht der beschichteten Perlglanzpigmente.

5. Verfahren nach einem der vorangegangenen Ansprüchen,
**dadurch gekennzeichnet,**
**daß** die Schritte (bi) und (c) zusammengefasst werden, indem das Versprühen der beschichteten Perlglanzpigmente und das Entfernen des Lösemittels durch Sprühtrocknen erfolgt.

6. Verfahren nach einem der vorangegangenen Ansprüchen,
**dadurch gekennzeichnet,**
**daß** die Schritte (bii) und (c) zusammengefasst werden, indem das Beschichten und Trocknen der Perlglanzpigmente in einem Fluidbett oder einer Wirbelschicht erfolgt, wobei die im Lösemittel gelösten oder dispergierten oligomeren und/oder polymeren Bindemittel eingesprüht werden und das Lösemittel während der Verwirbelung in dem Fluidbett oder der Wirbelschicht entfernt wird.

7. Verfahren nach einem der vorangegangenen Ansprüchen,
**dadurch gekennzeichnet,**
**dass** die Perlglanzpigmente ein Substrat aufweisen, welches aus der Gruppe, bestehend aus Glimmer, Talkum, Sericit, Kaolin sowie SiO₂-, Glas-,-Graphit-, Al₂O₃-Plättchen und deren Mischungen, ausgewählt wird.

8. Verfahren nach Anspruch 7,
**dadurch gekennzeichnet,**
**dass** die Substrate der Perlglanzpigmente mit einer oder mehreren Schichten aus der Gruppe, bestehend aus Metalloxiden, Metallhydroxiden, Metalloxidhydraten, Metallsuboxiden, Metallsulfiden, Metallfluoriden, Metallchalkogeniden, Metallnitriden, Metallcarbiden und deren Mischungen, beschichtet sind.

9. Verfahren nach Anspruch 7 oder 8,
**dadurch gekennzeichnet,**
**dass** die Substrate der Perlglanzpigmente mit einem mehrschichtigen Schichtaufbau, der Schichten mit oder aus Metalloxid, Metallhydroxid, Metallsuboxid und/oder Metalloxidhydrat aufweist, versehen sind.

10. Verfahren nach Anspruch 9,
**dadurch gekennzeichnet,**
**dass** der mehrschichtige Schichtaufbau Schichten mit oder aus hoch- und niedrigbrechendem Metalloxid, Metallhydroxid, Metallsuboxid, und/oder Metalloxidhydrat aufweist, die vorzugsweise alternierend angeordnet sind, wobei vorzugsweise auf dem Substrat zunächst wenigstens eine hochbrechende Schicht, nachfolgend wenigstens eine niedrigbrechende Schicht und schließlich wenigstens eine hochbrechende Schicht angeordnet ist.

11. Verfahren nach einem der Ansprüche 7 bis 10,
**dadurch gekennzeichnet,**
**dass** die Perlglanzpigmente Glasflakes als Substrat aufweisen und folgende Schichtstrukturen besitzen:
| |
|---|
| Glass flakes + TiO₂ + SiO₂ + TiO₂ |
| Glass flakes + TiO₂ + SiO₂ + Fe₂O₃ |
| Glass flakes + TiO₂ + SiO₂ + TiO₂/Fe₂O₃ |
| Glass flakes + TiO₂ + SiO₂ + (Sn,Sb)O₂ |
| Glass flakes + (Sn,Sb)O₂ + SiO₂ + TiO₂ |
| Glass flakes + Fe₂O₃ + SiO₂ + (Sn,Sb)O₂ |
| Glass flakes + TiO₂/Fe₂O₃ + SiO₂ + TiO₂/Fe₂O₃ |
| Glass flakes + TiO₂ + SiO₂ + MoS₂ |
| Glass flakes + TiO₂ + SiO₂ + Cr₂O₃ |
| Glass flakes + Cr₂O₃ + SiO₂ + TiO₂ |
| Glass flakes + Fe₂O₃ + SiO₂ + TiO₂ |
| Glass flakes + TiO₂ + Al₂O₃ + TiO₂ |
| Glass flakes + Fe₂TiO₅ + SiO₂ + TiO₂ |
| Glass flakes + TiO₂ + SiO₂ + Fe₂TiO₅/TiO₂ |
| Glass flakes + TiO₂ suboxide + SiO₂ + TiO₂ suboxide |
| Glass flakes + TiO₂ + SiO₂ + TiO₂ + SiO₂ + TiO₂ |

12. Verfahren nach einem der Ansprüche 7 bis 11,
**dadurch gekennzeichnet,**
**dass** die mit einer oder mehreren Metalloxidschicht(en) beschichteten Substrate der Perlglanzpigmente zusätzlich mit mindestens einer äußeren Metalloxid-,Metallhydroxid- und/oder Metalloxidhydratschutzschicht umhüllend beschichtet sind, wobei die Metalle vorzugsweise aus der Gruppe, die aus Silicium, Aluminium, Cer, Mangan, Zirkonium, Chrom und Mischungen davon besteht, ausgewählt werden.

13. Verfahren zur Herstellung von beschichteten Perlglanzpigmenten nach einem der Ansprüche 1-6,
**dadurch gekennzeichnet,**
**dass** die Perlglanzpigmente aus einem einzigen plättchenförmigen Material bestehen, wobei das Material aus der Gruppe, bestehend aus Bismuthoxychlorid, TiO₂ und Fe₂O₃, ausgewählt wird.

14. Verfahren zur Herstellung von beschichteten Perfglanzpigmenten nach einem der vorstehenden Ansprüchen,
**dadurch gekennzeichnet,**
**daß** die Perlglanzpigmente mit Haftvermittlern zur Bindemittelbeschichtung, vorzugsweise funktionalisierten Silanen, funktionalisierten Polymeren und/oder phosphororganischen Verbindungen, vorzugsweise Phosphorsäureester, vorbeschichtet sind.

15. Verfahren zur Herstellung von beschichteten Perlglanzpigmenten nach einem der vorhergehenden Ansprüche,
**dadurch gekennzeichnet,**
**daß** das oder die Bindemittel aus der Gruppe ausgewählt werden, die aus Polyesterharzen, Epoxyharzen, Polyurethanharzen, UV-härtenden Systemen, Acrylaten und Mischungen davon besteht.

16. Verfahren zur Herstellung eines Perlglanzpigmentes nach einem der vorstehenden Ansprüche,
**dadurch gekennzeichnet,**
**dass** die mit Bindemittel beschichteten Perlglanzpigmente nach Schritt c) zusätzlich einer Größenklassifikation unterzogen werden.

17. Verfahren zur Herstellung von beschichteten Perlglanzpigmenten nach einem der vorstehenden Ansprüche,
**dadurch gekennzeichnet,**
**daß** als Lösemittel Wasser, organisches Lösemittel oder Wasser-haltiges organisches Lösemittel verwendet wird.

18. Verfahren zur Herstellung von beschichteten Perlglanzpigmenten nach einem der vorstehenden Ansprüche,
**dadurch gekennzeichnet,**
**daß** dem in Lösemittel gelösten oder dispergierten oligomeren und/oder polymeren Bindemittel, vorzugsweise vor dem Inkontaktbringeh mit den Perlglanzpigmenten, weitere Zusatz- und/oder Hilfsstoffe zugesetzt werden.

19. Verfahren zur Herstellung von beschichteten Perlglanzpigmenten nach Anspruch 18,
**dadurch gekennzeichnet,**
**daß** die Zusatz- und/oder Hilfsstoffe Härter, Photoinitiatoren und/oder Polymerisationsinitiatoren umfassen.

20. Verfahren zur Herstellung von beschichteten Perlglanzpigmenten nach Anspruch 18,
**dadurch gekennzeichnet,**
**daß** die Zusatz- und/oder Hilfsstoffe organische und/oder anorganische Buntpigmente und/oder Farbstoffe umfassen,

21. Verfahren zur Herstellung von beschichteten Perlglanzpigmenten nach Anspruch 18,
**dadurch gekennzeichnet,**
**daß** die Zusatz- und/oder Hilfsstoffe weitere Lackkomponenten, die Additive, wie viskositätsvermindernde Additive, Slipmittel, Verlaufsmittel sowie Füllstoffe, Entgasungsmittel, filmbildende Hilfsmittel, Flammschutzmittel, Haftvermittler, Lichtschutzmittel, Mattierungsmittel, Photoinitinitiatoren, Polymerisationsinhibitoren, Polymerisationsinitiatoren, Radikalfänger, Rieselhilfen, strahlungshärtende Reaktivverdünner, thermisch vernetzbare Reaktivverdünner, UV-Absorber, Vernetzungskatalysatoren, Wachse und/oder Mischungen davon umfassen.

22. Verfahren zur Herstellung von beschichteten Perlglanzpigmenten nach einem der vorhergehenden Ansprüche,
**dadurch gekennzeichnet,**
**daß** die Vernetzung des bzw. der Bindemittel(s) und gegebenenfalls vorhandenem Härter thermisch induzierbar ist.

23. Beschichtete Perlglanzpigmente,
**dadurch gekennzeichnet,**
**dass** die Beschichtung die Perlglanzpigmente umhüllt und nicht ausgehärtetes, jedoch chemisch vemetzbare(s) und/oder unter Einwirkung von Wärme, IR-Strahlung, UV-Strahlung und/oder Elektronenstrahlen vernetzbare(s) oligomere(s) und/oder polymere(s) Bindemittel umfasst.

24. Beschichtete Perlglanzpigmente nach Anspruch 23,
**dadurch gekennzeichnet,**
**daß** die Korngröße d₅₀ der beschichteten Perlglanzpigmente in einem Bereich von 2 bis 190 µm liegt.

25. Beschichtete Perlglanzpigmente nach Anspruch 23 oder 24,
**dadurch gekennzeichnet,**
**daß** die Korngröße d₅₀ der beschichteten Perlglanzpigmente in einem Bereich von 5 bis 100 µm liegt.

26. Beschichtete Perlglanzpigmente nach einem der Ansprüche 23 bis 25,
**dadurch gekennzeichnet,**
**daß** die Perlglanzpigmente 20 bis 85 Gew.-% an oligomerem und/oder polymerem Bindemittel aufweisen, bezogen auf das Gesamtgewicht der beschichteten Perlglanzpigmente.

27. Beschichtete Perlglanzpigmente nach einem der Ansprüche 23 bis 26,
**dadurch gekennzeichnet,**
**daß** die Perlglanzpigmente vor Aufbringung der Beschichtung mit Bindemittel mit einer zusätzlichen, vorzugsweise vernetzten, Schicht oder mehreren zusätzlichen, vorzugsweise vernetzten, Schichten vorbeschichtet sind.

28. Beschichtete Perlglanzpigmente nach einem der Ansprüche 23 bis 27,
**dadurch gekennzeichnet,**
**dass** die Perlglanzpigmente ein Substrat aufweisen, welches aus der-Gruppe, bestehend aus Glimmer, Talkum, Sericit, Kaolin sowie SiO₂-, Glas-, Graphit-, Al₂O₃-Plättchen und deren Mischungen, ausgewählt wird.

29. Beschichtete Perlglanzpigmente nach Anspruch 28,
**dadurch gekennzeichnet,**
**dass** die Substrate der Perlglanzpigmente mit einer oder mehreren Schichten aus der Gruppe, bestehend aus Metalloxiden, Metallhydroxiden, Metalloxidhydraten, Metallsuboxiden, Metallsulfiden, Metallfluoriden, Metallchalkogeniden, Metallnitriden, Metallcarbiden und deren Mischungen, beschichtet sind.

30. Beschichtete Perlglanzpigmente nach Anspruch 28 oder 29,
**dadurch gekennzeichnet, dass** die Substrate der Perlglanzpigmente mit einem mehrschichtigen Schichtaufbau, der Schichten mit oder aus Metalloxid, Metallhydroxid,Metallsuboxid und/oder Metalloxidhydrat aufweiset, versehen sind.

31. Beschichtete Perlglanzpigmente nach Anspruch 30,
**dadurch gekennzeichnet,**
**dass** der mehrschichtige Schichtaufbau Schichten mit oder aus hoch- und niedrigbrechendem Metalloxid, Metallhydroxid,Metallsuboxid, und/oder Metalloxidhydrat aufweist, die vorzugsweise alternierend angeordnet sind, wobei vorzugsweise auf dem Substrat zunächst wenigstens eine hochbrechende Schicht, nachfolgend wenigstens eine niedrigbrechende Schicht und schließlich wenigstens eine hochbrechende Schicht angeordnet ist.

32. Beschichtete Perlglanzpigmente nach einem der Ansprüche 28 bis 31,
**dadurch gekennzeichnet,**
**dass** die Perlglanzpigmente Glasflakes als Substrat aufweisen und folgende Schichtstrukturen besitzen:
| |
|---|
| Glass flakes + TiO₂ + SiO₂ + TiO₂ |
| Glass flakes + TiO₂ + SiO₂ + Fe₂O₃ |
| Glass flakes + TiO₂ + SiO₂ + TiO₂/Fe₂O₃ |
| Glass flakes + TiO₂ + SiO₂ + (Sn,Sb)O₂ |
| Glass flakes + (Sn,Sb)O₂ + SiO₂ + TiO₂ |
| Glass flakes + Fe₂O₃ + SiO₂ + (Sn,Sb)O₂ |
| Glass flakes + TiO₂/Fe₂O₃ + SiO₂ + TiO₂/Fe₂O₃ |
| Glass flakes + TiO₂ + SiO₂ + MoS₂ |
| Glass flakes + TiO₂ + SiO₂ + Cr₂O₃ |
| Glass flakes + Cr₂O₃ + SiO₂ + TiO₂ |
| Glass flakes + Fe₂O₃ + SiO₂ + TiO₂ |
| Glass flakes + TiO₂ + Al₂O₃ + TiO₂ |
| Glass flakes + Fe₂TiO₅ + SiO₂ + TiO₂ |
| Glass flakes + TiO₂ + SiO₂ + Fe₂TiO₅/TiO₂ |
| Glass flakes + TiO₂ suboxide + SiO₂ + TiO₂ suboxide |
| Glass flakes + TiO₂ + SiO₂ + TiO₂ + SiO₂ + TiO₂ |

33. Beschichtete Perlglanzpigmente einem der Ansprüche 28 bis 32,
**dadurch gekennzeichnet,**
**dass** die mit einer oder mehreren Metalloxidschicht(en) beschichteten Substrate der Perlglanzpigmente zusätzlich mit mindestens einer äußeren Metalloxid-, Metallhydroxid- und/oder Metalloxidhydratschutzschicht umhüllend beschichtet sind, wobei die Metalle vorzugsweise aus der Gruppe, die aus Silicium, Aluminium, Cer, Mangan, Zirkonium, Chrom und Mischungen davon besteht, ausgewählt sind.

34. Beschichtete Perlglanzpigmente nach einem der Ansprüche 23 bis 27,
**dadurch gekennzeichnet,**
**dass** die Perlglanzpigmente aus einem einzigen plättchenförmigen Material bestehen, wobei das Material aus der Gruppe, bestehend aus Bismuthoxychlorid, TiO₂ und Fe₂O₃, ausgewählt ist.

35. Beschichtete Perlglanzpigmente nach einem der Ansprüche 23 bis 34,
**dadurch gekennzeichnet,**
**daß** die Perlglanzpigmente mit Haftvermittlern zur Bindemittelbeschichtung, vorzugsweise funktionalisierten Silanen, funktionalisierten Polymeren und/oder phosphororganischen Verbindungen, vorzugsweise Phosphorsäureester vorbeschichtet sind.

36. Beschichtete Perlglanzpigmente nach einem der Ansprüche 23 bis 35,
**dadurch gekennzeichnet,**
**daß** das oder die Bindemittel aus der Gruppe ausgewählt werden, die aus Polyesterharzen, Epoxyharzen, Polyurethanharzen, UV-härtenden Systemen, Acrylaten und Mischungen davon besteht.

37. Beschichtete Perlglanzpigmente nach einem der Ansprüche 23 bis 36,
**dadurch gekennzeichnet,**
**daß** in der Beschichtung neben Bindemittel weitere Zusatz- und/oder Hilfsstoffe enthalten sind.

38. Beschichtete Perlglanzpigmente nach Anspruch 37,
**dadurch gekennzeichnet,**
**daß** die Zusatz- und/oder Hilfsstoffe Härter, Photoinitiatoren und/oder Polymerisationsinitiatoren umfassen.

39. Beschichtete Perlglanzpigmente nach Anspruch 37,
**dadurch gekennzeichnet,**
**daß** die Zusatz- und/oder Hilfsstoffe organische und/oder anorganische Buntpigmente und/oder Farbstoffe umfassen.

40. Beschichtete Perlglanzpigmente nach Anspruch 37,
**dadurch gekennzeichnet,**
**daß** die Zusatz- und/oder Hilfsstoffe weitere Lackkomponenten, die Additive, wie viskositätsvermindernde Additive, Slipmittel, Verlaufsmittel sowie Füllstoffe, Entgasungsmittel, filmbildende Hilfsmittel, Flammschutzmittel, Haftvermittler, Lichtschutzmittel, Mattierungsmittel, Photoinitinitiatoren, Polymerisationsinhibitoren, Polymerisationsinitiatoren, Radikalfänger, Rieselhilfen, strahlungshärtende Reaktivverdünner, thermisch vernetzbare Reaktivverdünner, UV-Absorber, Vernetzungskatalysatoren, Wachse und/oder Mischungen davon umfassen.

41. Beschichtete Perlglanzpigmente nach einem der Ansprüche 23 bis 40,
**dadurch gekennzeichnet,**
**daß** die Vernetzung des bzw. der Bindemittel(s) und gegebenenfalls vorhandenem Härter thermisch induzierbar ist.

42. Beschichtete Perlglanzpigmente nach einem der Ansprüche 23 bis 41,
**dadurch gekennzeichnet,**
**daß** die Perlglanzpigmente zusammen mit einer Flüssigphase, vorzugsweise organischem Lösemittel, als Paste vorliegen.

43. Beschichtungszusammensetzung,
**dadurch gekennzeichnet,**
**daß** die Beschichtungszusammensetzung beschichtete Perlglanzpigmente nach einem der Ansprüche 23 bis 42 enthält.

44. Beschichtungszusammensetzung nach Anspruch 43,
**dadurch gekennzeichnet,**
**daß** die Beschichtungszusammensetzung einen Perlglanzpigmentgehalt von 0,5 bis 15 Gew.-%, vorzugsweise von 1 bis 12 Gew.-%, bezogen auf das Gesamtgewicht der Beschichtungszusammensetzung, aufweist.

45. Beschichtungszusammensetzung nach einem der Ansprüche 43 bis 44,
**dadurch gekennzeichnet,**
**dass** die Beschichtungszusammensetzung ein Pulverlack ist.

46. Beschichtungszusammensetzung nach Anspruch 45,
**dadurch gekennzeichnet,**
**daß** der Pulverlack und die Beschichtung der Perlglanzpigmente wenigstens ein gleiches Bindemittel enthalten.

47. Beschichteter Gegenstand,
**dadurch gekennzeichnet,**
**daß** der Gegenstand mit Perlglanzpigmenten gemäß einem der Ansprüche 23 bis 42 oder mit einer Beschichtungszusammensetzung gemäß einem der Ansprüche 43 bis 46 beschichtet ist.

48. Beschichteter Gegenstand nach Anspruch 47,
**dadurch gekennzeichnet,**
**daß** der Gegenstand ein Fassadenelement, vorzugsweise eine Fassadenplatte, ein Fensterrahmen, eine Fahrzeugkarosserie, vorzugsweise eine Karosserie eines Kraftfahrzeuges, oder ein Rahmen eines Fahrzeugs, vorzugsweise eines Fahrrads oder Motorrads, ist.

49. Verwendung des Perlglanzpigmentes nach einem der Ansprüche 23 bis 42 in Farben, Lacken, Pulverlacken, Druckfarben, Kunststoffen oder kosmetischen Formulierungen wie Nagellack.

## Claims

1. Method for producing coated pearlescent pigments, wherein the coating covers the pearlescent pigments and comprises uncured, but chemically cross-linkable and / or oligomeric and / or polymeric binding agent(s) which can be cross-linked by heat, IR radiation, UV radiation and / or electron rays, and the method comprises the following steps:
a) production of a solution or dispersion of an oligomeric and / or polymeric binding agent in a solvent, preferably an organic solvent,
b) coating of the pearlescent pigments with the binding agent through
i) dispersion of the pearlescent pigment in the solution or dispersion of a) and subsequent spray drying of this dispersion or
ii) spraying of the solution or dispersion of a) on pearlescent pigments subjected to swirling in a gas flow,
c) drying of the pearlescent pigments coated with binding agent in a moving gas flow.

2. Method for producing coated pearlescent pigments according to claim 1,
**characterised in that**
the particle size d₅₀ of the coated pearlescent pigments lies in the range from 2 to 190 µm.

3. Method for producing coated pearlescent pigments according to claim 1 or 2,
**characterised in that**
the particle size d₅₀ of the coated pearlescent pigments lies in the range from 5 to 100 µm.

4. Method according to one of the preceding claims,
**characterised in that**
the pearlescent pigments comprise 20 to 85% by weight of oligomeric and / or polymeric binding agent in relation to the total weight of the coated pearlescent pigments.

5. Method according to one of the preceding claims,
**characterised in that**
the steps (bi) and (c) are put together **in that** the spraying of the coated pearlescent pigments and the removal of the solvent take place through spray drying.

6. Method according to one of the preceding claims,
**characterised in that**
the steps (bii) and (c) are put together **in that** the coating and drying of the pearlescent pigments take place in a fluid bed or turbulent bed, whereby the oligomeric and / or polymeric binding agents dissolved or dispersed in the solvent are sprayed in and the solvent is removed during the turbulence in the fluid bed or the turbulent bed.

7. Method according to one of the preceding claims,
**characterised in that**
the pearlescent pigments comprise a substrate which is selected from the group consisting of mica, talc, sericite, kaolin and SiO₂ platelets, glass platelets, graphite platelets, Al₂O₃ platelets and mixtures thereof.

8. Method according to claim 7,
**characterised in that**
the substrates of the pearlescent pigments are coated with one or more layers from the group consisting of metal oxides, metal hydroxides, metal oxide hydrates, metal suboxides, metal sulphides, metal fluorides, metal chalcogenides, metal nitrides, metal carbides and mixtures thereof.

9. Method according to claim 7 or 8,
**characterised in that**
the substrates of the pearlescent pigments are provided with a multi-layer coating structure which comprises layers with or consisting of metal oxide, metal hydroxide, metal suboxide and / or metal oxide hydrate.

10. Method according to claim 9,
**characterised in that**
the multi-layer coating structure comprises layers with or consisting of high and low refractive index metal oxide, metal hydroxide, metal suboxide and / or metal oxide hydrate, which are preferably arranged alternately, whereby at least one high refractive index layer is preferably arranged initially on the substrate, then at least one low refractive index layer and finally at least one high refractive index layer.

11. Method according to one of the claims 7 to 10,
**characterised in that**
the pearlescent pigments comprise glass flakes as a substrate and have the following layer structures:
| |
|---|
| Glass flakes + TiO₂ + SiO₂ + TiO₂ |
| Glass flakes + TiO₂ + SiO₂ + Fe₂O₃ |
| Glass flakes + TiO₂ + SiO₂ + TiO₂/Fe₂O₃ |
| Glass flakes + TiO₂ + SiO₂ + (Sn,Sb)O₂ |
| Glass flakes + (Sn,Sb)O₂+SiO₂ + TiO₂ |
| Glass flakes + Fe₂O₃ + SiO₂ + (Sn,Sb)O₂ |
| Glass flakes + TiO₂/Fe₂O₃+SiO₂ + TiO₂/ Fe₂O₃ |
| Glass flakes + TiO₂ + SiO₂ + MoS₂ |
| Glass flakes + TiO₂ + SiO₂ + Cr₂O₃ |
| Glass flakes + Cr₂O₃ + SiO₂ + TiO₂ |
| Glass flakes + Fe₂O₃ + SiO₂ + TiO₂ |
| Glass flakes + TiO₂ + Al₂O₃ + TiO₂ |
| Glass flakes + Fe₂TiO₅ + SiO₂ + TiO₂ |
| Glass flakes + TiO₂ + SiO₂ + Fe₂TiO₅/TiO₂ |
| Glass flakes + TiO₂suboxides + SiO₂ + TiO₂suboxides |
| Glass flakes + TiO₂ + SiO₂ + TiO₂ + SiO₂ + T iO₂ |

12. Method according to one of the claims 7 to 11,
**characterised in that**
the substrates of the pearlescent pigments coated with one or more metal oxide layer(s) are additionally coated with at least one outer metal oxide, metal hydroxide and / or metal oxide hydrate protective layer to cover them, whereby the metals are preferably selected from the group which consists of silicon, aluminium, cerium, manganese, zirconium, chromium and mixtures thereof.

13. Method for producing coated pearlescent pigments according to one of the claims 1 to 6,
**characterised in that**
the pearlescent pigments consist of a single platelet-form material, whereby the material is selected from the group consisting of bismuth oxychloride, TiO₂ and Fe₂O₃.

14. Method for producing coated pearlescent pigments according to one of the preceding claims,
**characterised in that**
the pearlescent pigments are pre-coated with adhesion promoters for the binding agent coating, preferably functionalised silanes, functionalised polymers and / or organophosphorous compounds, preferably phosphoric acid esters.

15. Method for producing coated pearlescent pigments according to one of the preceding claims,
**characterised in that**
the binding agent (s) is / are selected from the group which consists of polyester resins, epoxy resins, polyurethane resins, UV curing systems, acrylates and mixtures thereof.

16. Method for producing a pearlescent pigment according to one of the preceding claims,
**characterised in that**
the pearlescent pigments coated with binding agent are additionally subjected after step c) to a size classification.

17. Method for producing coated pearlescent pigments according to one of the preceding claims,
**characterised in that**
water, organic solvent or water-containing organic solvent is used as a solvent.

18. Method for producing coated pearlescent pigments according to one of the preceding claims,
**characterised in that**
further additives and / or auxiliary substances are added to the oligomeric and / or polymeric binding agent dissolved or dispersed in the solvent before it is brought into contact with the pearlescent pigments.

19. Method for producing coated pearlescent pigments according to claim 18,
**characterised in that**
the additives and / or auxiliary substances comprise hardeners, photoinitiators and / or polymerisation initiators.

20. Method for producing coated pearlescent pigments according to claim 18,
**characterised in that**
the additives and / or auxiliary substances comprise organic and / or inorganic coloured pigments and /or colouring agents.

21. Method for producing coated pearlescent pigments according to claim 18,
**characterised in that**
the additives and / or auxiliary substances comprise further varnish components, the additives such as viscosity reducing additives, slip agents, levelling agents as well as fillers, degasifying agents, film forming auxiliary agents, flame retardants, adhesion promoters, light protection agents, delustrants, photoinitiators, polymerisation inhibitors, polymerisation initiators, radical scavengers, anticaking agents, radiation curing reactive thinners, thermally cross-linkable reactive thinners, UV absorbers, cross-linking catalysts, waxes and / or mixtures thereof.

22. Method for producing coated pearlescent pigments according to one of the preceding claims,
**characterised in that**
the cross-linking of the binding agent(s) and possibly present hardeners can be thermally induced.

23. Coated pearlescent pigments,
**characterised in that**
the coating covers the pearlescent pigments and comprises uncured, but chemically cross-linkable and / or oligomeric and / or polymeric binding agent(s) that can be cross-linked by heat, IR radiation, UV radiation and / or electron rays.

24. Coated pearlescent pigments according to claim 23,
**characterised in that**
the particle size d₅₀ of the coated pearlescent pigments lies in the range between 2 and 190 µm.

25. Coated pearlescent pigments according to claim 23 or 24,
**characterised in that**
the particle size d₅₀ of the coated pearlescent pigments lie in the range between 5 and 100 µm.

26. Coated pearlescent pigments according to one of the claims 23 to 25,
**characterised in that**
the pearlescent pigments comprise 20 to 85% by weight of oligomeric and / or polymeric binding agents in relation to the total weight of the coated pearlescent pigments.

27. Coated pearlescent pigments according to one of the claims 23 to 26,
**characterised in that**
the pearlescent pigments are pre-coated before application of the coating with binding agent with an additional, preferably cross-linked layer or a plurality of additional, preferably cross-linked layers.

28. Coated pearlescent pigments according to one of the claims 23 to 27,
**characterised in that**
the pearlescent pigments comprise a substrate which is selected from the group consisting of mica, talc, sericite, kaolin and SiO₂ platelets, glass platelets, graphite platelets, Al₂O₃ platelets and mixtures thereof.

29. Coated pearlescent pigments according to claim 28,
**characterised in that**
the substrates of the pearlescent pigments are coated with one or more layers from the group consisting of metal oxides, metal hydroxides, metal oxide hydrates, metal suboxides, metal sulphides, metal fluorides, metal chalcogenides, metal nitrides, metal carbides and mixtures thereof.

30. Coated pearlescent pigments according to claim 28 or 29,
**characterised in that**
the substrates of the pearlescent pigments are provided with a multi-layer coating structure which comprises layers with or consisting of metal oxide, metal hydroxide, metal suboxide and / or metal oxide hydrate.

31. Coated pearlescent pigments according to claim 30,
**characterised in that**
the multi-layer coating structure comprises layers with or consisting of high and low refractive index metal oxide, metal hydroxide, metal suboxide and / or metal oxide hydrate, which are preferably arranged alternately, whereby at least one high refractive index layer is preferably initially arranged on the substrate, then at least one low refractive index layer and finally at least one high refractive index layer.

32. Coated pearlescent pigments according to one of the claims 28 to 31,
**characterised in that**
the pearlescent pigments comprise glass flakes as a substrate and have the following layer structures:
| |
|---|
| Glass flakes + TiO₂ + SiO₂ + TiO |
| Glass flakes + TiO₂ + SiO₂ + Fe₂O₃ |
| Glass flakes + TiO₂ + SiO₂ + TiO₂/Fe₂O₃ |
| Glass flakes + TiO₂ + SiO₂ + (Sn,Sb)O₂ |
| Glass flakes + (Sn,Sb)O₂+ SiO₂ + TiO₂ |
| Glass flakes + Fe₂O₃ + SiO₂ + (Sn,Sb)O₂ |
| Glass flakes + TiO₂/Fe₂O+SiO₂ + TiO/ Fe₂O₃ |
| Glass flakes + TiO₂ + SiO₂ + MoS₂ |
| Glass flakes + TiO₂ + SiO₂ + Cr₂O₃ |
| Glass flakes + Cr₂O₃ + SiO₂ + TiO₂ |
| Glass flakes + Fe₂O₃ + SiO₂ + TiO₂ |
| Glass flakes + TiO₂ + Al₂O₃ + TiO₂ |
| Glass flakes + Fe₂TiO₅ + SiO₂ + TiO₂ |
| Glass flakes + TiO₂ + SiO₂ + Fe₂TiO₅/TiO₂ |
| Glass flakes + TiO₂suboxides + SiO₂ + TiO₂suboxides |
| Glass flakes + TiO₂ + SiO₂ + TiO₂ + SiO_{2 +} TiO₂ |

33. Coated pearlescent pigments according to one of the claims 28 to 32,
**characterised in that**
the substrates of the pearlescent pigments coated with one or more metal oxide layer(s) are additionally coated with at least one outer metal oxide, metal hydroxide and / or metal oxide hydrate protective layer to cover them, whereby the metals are preferably selected from the group which consists of silicon, aluminium, cerium, manganese, zirconium, chromium and mixtures thereof.

34. Coated pearlescent pigments according to one of the claims 23 to 27,
**characterised in that**
the pearlescent pigments consist of a single platelet-form material, whereby the material is selected from the group consisting of bismuth oxychloride, TiO₂ and Fe₂O₃.

35. Coated pearlescent pigments according to one of the claims 23 to 34,
**characterised in that**
the pearlescent pigments are pre-coated with adhesion promoters for the binding agent coating, preferably functionalised silanes, functionalised polymers and / or organophosphorous compounds, preferably phosphoric acid esters.

36. Coated pearlescent pigments according to one of the claims 23 to 35,
**characterised in that**
the binding agent(s) is / are selected from the group which consists of polyester resins, epoxy resins, polyurethane resins, UV curing systems, acrylates and mixtures thereof.

37. Coated pearlescent pigments according to one of the claims 23 to 36,
**characterised in that**
further additives and / or auxiliary substances are contained in the coating besides binding agent.

38. Coated pearlescent pigments according to claim 37,
**characterised in that**
the additives and / or auxiliary substances comprise hardeners, photoinitiators and / or polymerisation initiators.

39. Coated pearlescent pigments according to claim 37,
**characterised in that**
the additives and / or auxiliary substances comprise organic and / or inorganic coloured pigments and / or colouring agents.

40. Coated pearlescent pigments according to claim 37,
**characterised in that**
the additives and / or auxiliary substances comprise further varnish components, the additives such as viscosity reducing additives, slip agents, levelling agents as well as fillers, degasifying agents, film forming auxiliary agents, flame retardants, adhesion promoters, light protection agents, delustrants, photoinitiators, polymerisation inhibitors, polymerisation initiators, radical scavengers, anticaking agents, radiation curing reactive thinners, thermally cross-linkable reactive thinners, UV absorbers, cross-linking catalysts, waxes and / or mixtures thereof.

41. Coated pearlescent pigments according to one of the claims 23 to 40,
**characterised in that**
the cross-linking of the binding agent(s) and possibly present hardener can be thermally induced.

42. Coated pearlescent pigments according to one of the claims 23 to 41,
**characterised in that** the pearlescent pigments together with a liquid phase, preferably organic solvent, are in the form of a paste.

43. Coating composition,
**characterised in that**
the coating composition contains coated pearlescent pigments according to one of the claims 23 to 42.

44. Coating composition according to claim 43,
**characterised in that**
the coating composition has a pearlescent pigment content of 0.5 to 15% by weight, preferably of 1 to 12% by weight, in relation to the total weight of the coating composition.

45. Coating composition according to one of the claims 43 to 44,
**characterised in that**
the coating composition is a powder varnish.

46. Coating composition according to claim 45,
**characterised in that**
the powder varnish and the coating of the pearlescent pigments contain at least one binding agent which is the same.

47. Coated object,
**characterised in that**
the object is coated with pearlescent pigments according to one of the claims 23 to 42 or with a coating composition according to one of the claims 43 to 46.

48. Coated object according to claim 47,
**characterised in that**
the object is a façade element, preferably a façade panel, a window frame, a vehicle bodywork, preferably a bodywork of a motor vehicle, or a chassis of a vehicle, preferably of a bicycle or motorcycle.

49. Use of the pearlescent pigment according to one of the claims 23 to 42 in paints, varnishes, powder varnishes, printing inks, plastics or cosmetic formulations such as nail varnish.

## Revendications

1. Procédé de fabrication de pigments nacrés recouverts, sachant que le revêtement enveloppe les pigments nacrés et comporte un/des liants non durcis, mais comporte toutefois un/des liants oligomères et/ou polymères chimiquement réticulables et/ou réticulables sous l'action de la chaleur, de rayons IR, de rayons UV et/ou de rayons électroniques et que le procédé englobe les étapes suivantes :
a) Fabrication d'une solution ou d'une dispersion d'un liant oligomère et/ou polymère dans un solvant, de préférence un solvant organique,
b) Revêtement des pigments nacrés avec le liant par
i) Dispersion des pigments nacrés dans la solution ou dispersion de a) puis séchage par atomisation de cette dispersion ou
ii) Atomisation de la solution ou dispersion de a) sur des pigments nacrés tourbillonnant dans un jet de gaz,
c) Séchage des pigments perlés recouverts de liant dans un jet de gaz agité.

2. Procédé de fabrication de pigments nacrés recouverts selon la revendication 1,
**caractérisé en ce que**
la taille des grains d₅₀ des pigments nacrés recouverts est comprise en 2 et 190 µm.

3. Procédé de fabrication de pigments nacrés recouverts selon la revendication 1 ou 2,
**caractérisé en ce que**
la taille des grains d₅₀ des pigments nacrés recouverts est comprise en 5 et 100 µm.

4. Procédé selon l'une des revendications précédentes,
**caractérisé en ce que**
le liant oligomère et/ou polymère constitue 20 à 85% du poids des pigments nacrés, par rapport au poids total des pigments nacrés recouverts.

5. Procédé selon l'une des revendications précédentes
**caractérisé en ce que**
les étapes (bi) et (c) sont regroupées, en ce sens où la pulvérisation des pigments nacrés et l'élimination du solvant se font par séchage par atomisation..

6. Procédé selon l'une des revendications précédentes
**caractérisé en ce que**
les étapes (bii) et (c) sont regroupées, en ce sens où le recouvrement et le séchage des pigments nacrés se fait dans un bain fluide ou une couche fluidisée, sachant que les liants oligomères et/ou polymères dissouts ou dispersés dans le solvant sont pulvérisés et que le solvant est éliminé pendant le tourbillonnement dans le bain fluide ou la couche fluidisée.

7. Procédé selon l'une des revendications précédentes
**caractérisé en ce que**
les pigments nacrés présentent un substrat qui est choisi dans le groupe composé de mica, de talc, de séricite, de kaolin ainsi que de plaquettes de SiO₂, de verre, de graphite et de Al₂O₃ et de leurs composés.

8. Procédé selon la revendication 7
**caractérisé en ce que**
les substrats des pigments nacrés sont recouverts par une ou plusieurs couches du groupe composé d'oxydes métalliques, d'hydroxydes métalliques, d'hydrates d'oxyde métalliques, de sous-oxydes métalliques, de sulfures métalliques, de fluorures métalliques, de chalcogénures métalliques, de nitrures métalliques, de carbures métalliques et de leurs composés.

9. Procédé selon la revendication 7 ou 8,
**caractérisé en ce que**
les substrats des pigments nacrés sont pourvus d'une composition multicouches qui présente des couches de ou comportant de l'oxyde métallique, du sous-oxyde métallique et/ou de l'hydrate d'oxyde métallique.

10. Procédé selon la revendication 9,
**caractérisé en ce que**
la composition multicouches présente des couches de ou comportant de l'oxyde métallique, l'hydroxyde métallique, du sous-oxyde métallique et/ou de l'hydrate d'oxyde métallique hautement et faiblement cassables qui sont de préférence disposées en alternance, sachant que de préférence, est tout d'abord disposée au moins une couche hautement cassable suivie au moins d'une couche faiblement cassable et enfin au moins d'une couche hautement cassable.

11. Procédé selon l'une des revendications 7 à 10
**caractérisé en ce que**
les pigments nacrés présentent des fragments de verre comme substrat et qu'ils possèdent la structure de couche suivante :
| |
|---|
| Fragments de verre + TiO₂ + SiO₂ + TiO₂ |
| Fragments de verre + TiO₂ + SiO₂ + Fe₂O₃ |
| Fragments de verre + TiO₂ + SiO₂ + TiO₂/ Fe₂O₃ |
| Fragments de verre + TiO₂ + SiO₂ + (Sn,Sb)O₂ |
| Fragments de verre + (Sn,Sb)O₂+ SiO₂ + TiO₂ |
| Fragments de verre + Fe₂O₃ + SiO₂ + (Sn,Sb)O₂ |
| Fragments de verre + TiO₂ + Fe₂O₃ + SiO₂ + TiO₂/ Fe₂O₃ |
| Fragments de verre + TiO₂ + SiO₂ + MoS₂ |
| Fragments de verre + TiO₂ + SiO₂ + Cr₂O₃ |
| Fragments de verre + Cr₂O₃ + SiO₂ + TiO₂ |
| Fragments de verre + Fe₂O₃ + SiO₂ + TiO₂ |
| Fragments de verre + TiO₂ + Al₂O₃ + TiO₂ |
| Fragments de verre + Fe₂TiO₅ + SiO₂ + TiO₂ |
| Fragments de verre + TiO₂ + SiO₂ + Fe₂TiO₅/ TiO₂ |
| Fragments de verre + TiO₂ sous-oxyde + SiO₂ + TiO₂ sous-oxyde |
| Fragments de verre + TiO₂ + SiO₂ + TiO₂ + SiO₂ + TiO₂ |

12. Procédé selon l'une des revendications 7 à 11
**caractérisé en ce que**
les substrats des pigments nacrés recouverts d'une ou plusieurs couches d'oxyde métallique sont de plus recouverts de façon à être enveloppés par au moins une couche externe d'oxyde métallique, d'une couche d'hydroxyde métallique et/ou d'une couche de protection d'hydrate d'oxyde métallique, sachant que les métaux sont choisis de préférence dans le groupe constitué de silicium, d'aluminium, de cérium, de manganèse, de zirconium, de chrome et de leurs composés.

13. Procédé de fabrication de pigments nacrés recouverts selon l'une des revendications 1 à 6,
**caractérisé en ce que**
les pigments nacrés sont constitués d'un seul matériau en forme de plaquette, sachant que le matériau est choisi dans le groupe composé de chlorure d'oxyde de bismuth, de TiO₂ et de Fe₂O₃.

14. Procédé de fabrication de pigments nacrés recouverts selon l'une des revendications précédentes,
**caractérisé en ce que**
les pigments nacrés sont préalablement recouverts d'agents d'adhérence pour la couche de liant, de préférence du silane fonctionnalisé, des polymères fonctionnalisés et/ou des liaisons phosphores organiques, de préférence de l'ester d'acide de phosphore.

15. Procédé de fabrication de pigments nacrés recouverts selon l'une des revendications précédentes,
**caractérisé en ce que**
le ou les liants sont choisis dans le groupe composé de résines de polyester, de résines d'époxyde, de résines de polyuréthane, de systèmes durcissant aux UV, d'acrylates et de leurs composés.

16. Procédé de fabrication de pigments nacrés recouverts selon l'une des revendications précédentes,
**caractérisé en ce que**
les pigments nacrés recouverts de liant selon l'étape c) sont de plus soumis à une classification par taille.

17. Procédé de fabrication de pigments nacrés recouverts selon l'une des revendications précédentes,
**caractérisé en ce que**
en guise de solvant, on utilise de l'eau, des solvants organiques ou des solvants organiques aqueux.

18. Procédé de fabrication de pigments nacrés recouverts selon l'une des revendications précédentes,
**caractérisé en ce que**
des substances complémentaires et/ou auxiliaires sont ajoutées, de préférence avant la mise en contact avec les pigments nacrés, au liant oligomère et/ou polymère dilué ou dispersé dans le solvant.

19. Procédé de fabrication de pigments nacrés recouverts selon la revendication 18,
**caractérisé en ce que**
les substances complémentaires et/ou auxiliaires englobent des durcissant, des photoinitiateurs et/ou des initiateurs de polymérisation.

20. Procédé de fabrication de pigments nacrés recouverts selon la revendication 18,
**caractérisé en ce que**
les substances complémentaires et/ou auxiliaires englobent des pigments multicolores organiques et/ou non organiques et/ou des colorants.

21. Procédé de fabrication de pigments nacrés recouverts selon la revendication 18,
**caractérisé en ce que**
les substances complémentaires et/ou auxiliaires englobent d'autres composants de peinture qui comportent des additifs, comme les additifs anti-viscosité, les agents d'étalage, les agents d'écoulement de même que les agents de remplissage, les agents de dégazage, les agents auxiliaires de formation de film, les agents ignifuges, les agents d'adhérence, les agents de protection contre la lumière, les agents matant, les photoinitiateurs, les inhibiteurs de polymérisation, les initiateurs de polymérisation, les capteurs radicaux, les agents de ruissellement, les diluants réactifs durcissant par irradiation, les diluants réactifs à réticulation thermique, les absorbants d'UV, les catalyseurs de réticulation, les cires et/ou leurs composés.

22. Procédé de fabrication de pigments nacrés recouverts selon l'une des revendications précédentes,
**caractérisé en ce que** la réticulation du ou des liants et le cas échéant d'un durcissant présent, est thermiquement inductible.

23. Pigments nacrés recouverts,
**caractérisé en ce que**
le recouvrement enveloppe les pigments nacrés et comporte un ou plusieurs liants oligomères et/ou polymères non durcis, toutefois chimiquement réticulables et/ou réticulables sous l'action de la chaleur, de rayons IR, de rayons UV et/ou de rayons électroniques.

24. Pigments nacrés recouverts selon la revendication 23,
**caractérisé en ce que**
la taille des grains d₅₀ des piments nacrés recouverts est de l'ordre de 2 à 190 µm.

25. Pigments nacrés recouverts selon la revendication 23 ou 24,
**caractérisé en ce que**
la taille des grains d₅₀ des piments nacrés recouverts est de l'ordre de 5 à 100 µm.

26. Pigments nacrés recouverts selon l'une des revendications 23 à 25,
**caractérisé en ce que**
les pigments nacrés présentent un poids composé de 20 à 85% de liant oligomère et/ou polymères, par rapport au poids total des pigments nacrés recouverts.

27. Pigments nacrés recouverts selon l'une des revendications 23 à 26,
**caractérisé en ce que**
les pigments nacrés sont préalablement recouverts d'une couche supplémentaire, de préférence réticulée ou de plusieurs couches supplémentaires, de préférence réticulée, avant l'application de la couche de liant.

28. Pigments nacrés recouverts selon l'une des revendications 23 à 27,
**caractérisé en ce que**
les pigments nacrés présentent un substrat, lequel est choisi dans le groupe composé de mica, de talc, de séricite, de kaolin ainsi que de plaquettes de SiO₂, de verre, de graphite et de Al₂O₃ et de leurs composés.

29. Pigments nacrés recouverts selon la revendication 28,
**caractérisé en ce que**
les substrats des pigments nacrés sont recouverts d'une ou plusieurs couches du groupe composé d'oxydes métalliques, d'hydroxydes métalliques, d'hydrates d'oxyde métalliques, de sous-oxydes métalliques, de sulfures métalliques, de fluorures métalliques, de chalcogénures métalliques, de nitrures métalliques, de carbures métalliques et de leurs composés.

30. Pigments nacrés recouverts selon la revendication 28 ou 29,
**caractérisé en ce que**
les substrats des pigments nacrés sont pourvus d'une composition multicouches qui présente des couches de ou comportant de l'oxyde métallique, de l'hydroxyde métallique, du sous-oxyde métallique et/ou de l'hydrate d'oxyde métallique.

31. Pigments nacrés recouverts selon la revendication 30,
**caractérisé en ce que**
la composition multicouches présente des couches de ou comportant de l'oxyde métallique, l'hydroxyde métallique, du sous-oxyde métallique et/ou de l'hydrate d'oxyde métallique hautement et faiblement cassables qui sont de préférence disposées en alternance, sachant que de préférence, est tout d'abord disposée au moins une couche hautement cassable suivie au moins d'une couche faiblement cassable et enfin au moins d'une couche hautement cassable.

32. Pigments nacrés recouverts selon l'une des revendications 28 à 31,
**caractérisé en ce que**
les pigments nacrés présentent des fragments de verre comme substrat et possèdent la structure de couche suivante :
| |
|---|
| Fragments de verre + TiO₂ + SiO₂ + TiO₂ |
| Fragments de verre + TiO₂ + SiO₂ + Fe₂O₃ |
| Fragments de verre + TiO₂ + SiO₂ + TiO₂/ Fe₂O₃ |
| Fragments de verre + TiO₂ + SiO₂ + (Sn,Sb)O₂ |
| Fragments de verre + (Sn,Sb)O₂+ SiO₂ + TiO₂ |
| Fragments de verre + Fe₂O₃ + SiO₂ + (Sn,Sb)O₂ |
| Fragments de verre + TiO₂ + Fe₂O₃ + SiO₂ + TiO₂/ Fe₂O₃ |
| Fragments de verre + TiO₂ + SiO₂ + MoS₂ |
| Fragments de verre + TiO₂ + SiO₂ + Cr₂O₃ |
| Fragments de verre + Cr₂O₃ + SiO₂ + TiO₂ |
| Fragments de verre + Fe₂O₃ + SiO₂ + TiO₂ |
| Fragments de verre + TiO₂ + Al₂O₃ + TiO₂ |
| Fragments de verre + Fe₂TiO₅ + SiO₂ + TiO₂ |
| Fragments de verre + TiO₂ + SiO₂ + Fe₂TiO₅/ TiO₂ |
| Fragments de verre + TiO₂ sous-oxyde + SiO₂ + TiO₂ sous-oxyde |
| Fragments de verre + TiO₂ + SiO₂ + TiO₂ + SiO₂ + TiO₂ |

33. Pigments nacrés recouverts selon l'une des revendications 28 à 32,
**caractérisé en ce que**
les substrats des pigments nacrés recouverts d'une ou plusieurs couches d'oxyde métallique sont de plus recouverts de façon à être enveloppés par au moins une couche externe d'oxyde métallique, d'une couche d'hydroxyde métallique et/ou d'une couche de protection d'hydrate d'oxyde métallique, sachant que les métaux sont choisis de préférence dans le groupe constitué de silicium, d'aluminium, de cérium, de manganèse, de zirconium, de chrome et de leurs composés.

34. Pigments nacrés recouverts selon l'une des revendications 23 à 27,
**caractérisé en ce que**
les pigments nacrés sont constitués d'un seul matériau en forme de plaquette, sachant que le matériau est choisi dans le groupe composé de chlorure d'oxyde de bismuth, de TiO₂ et de Fe₂O₃.

35. Pigments nacrés recouverts selon l'une des revendications 23 à 34,
**caractérisé en ce que**
les pigments nacrés sont préalablement recouverts d'agents d'adhérence pour la couche de liant, de préférence du silane fonctionnalisé, des polymères fonctionnalisés et/ou des liaisons phosphores organiques, de préférence de l'ester d'acide de phosphore.

36. Pigments nacrés recouverts selon l'une des revendications 23 à 35,
**caractérisé en ce que**
le ou les liants sont choisis dans le groupe composé de résines de polyester, de résines d'époxyde, de résines de polyuréthane, de systèmes durcissant aux UV, d'acrylates et de leurs composés.

37. Pigments nacrés recouverts selon l'une des revendications 23 à 36,
**caractérisé en ce que**
dans le recouvrement, sont contenues d'autres substances complémentaires et/ou auxiliaires, en plus du liant.

38. Pigments nacrés recouverts selon la revendication 37,
**caractérisé en ce que** les substances complémentaires et/ou auxiliaires englobent des durcissant, des photoinitiateurs et/ou des initiateurs de polymérisation.

39. Pigments nacrés recouverts selon la revendication 37,
**caractérisé en ce que**
les substances complémentaires et/ou auxiliaires englobent des pigments multicolores organiques et/ou non organiques et/ou des colorants.

40. Pigments nacrés recouverts selon la revendication 37,
**caractérisé en ce que**
les substances complémentaires et/ou auxiliaires englobent d'autres composants de peinture qui comportent des additifs, comme les additifs anti-viscosité, les agents d'étalage, les agents d'écoulement de même que les agents de remplissage, les agents de dégazage, les agents auxiliaires de formation de film, les agents ignifuges, les agents d'adhérence, les agents de protection contre la lumière, les agents matant, les photoinitiateurs, les inhibiteurs de polymérisation, les initiateurs de polymérisation, les capteurs radicaux, les agents de ruissellement, les diluants réactifs durcissant par irradiation, les diluants réactifs à réticulation thermique, les absorbants d'UV, les catalyseurs de réticulation, les cires et/ou leurs composés.

41. Pigments nacrés recouverts selon l'une des revendications 23 à 40,
**caractérisé en ce que**
la réticulation du ou des liants et le cas échéant d'un durcissant présent, est thermiquement inductible.

42. Pigments nacrés recouverts selon l'une des revendications 23 à 41,
**caractérisé en ce que**
les pigments nacrés se présentent comme pâte, en association avec une phase liquide, de préférence un solvant organique.

43. Composition de la couche,
**caractérisé en ce que**
la composition de la couche contient des pigments nacrés conformes à l'une des revendications 23 à 42.

44. Composition de la couche selon la revendication 43,
**caractérisé en ce que**
la composition de la couche présente un taux de pigments nacrés correspondant à 0,5 à 15%, de préférence à 1 à 12% du poids total de la composition de la couche.

45. Composition de la couche selon l'une des revendications 43 à 44
**caractérisé en ce que**
la composition de la couche est une peinture en poudre.

46. Composition de la couche selon la revendication 45,
**caractérisé en ce que**
la peinture en poudre et la couche des pigments nacrés contiennent au moins un même liant.

47. Objet recouvert,
**caractérisé en ce que**
l'objet est recouvert de pigments nacrés conformes à l'une des revendications 23 à 42 ou d'une composition de couche conforme à l'une des revendications 43 à 46.

48. Objet recouvert selon la revendication 47,
**caractérisé en ce que**
l'objet est un élément de façade, de préférence une plaque de façade, un cadre de fenêtre, une carrosserie de voiture, de préférence une carrosserie de camion, ou un cadre de véhicule, de préférence d'un vélo ou d'une moto.

49. Utilisation des pigments nacrés selon l'une des revendications 23 à 42 dans des peintres, des laques, des peintures en poudre, des encres d'impression, des plastiques ou des formules de cosmétique comme les vernis à ongles.
